(19) Europäisches Patentamt
European Patent Office
Office européen des brevets

(11) **EP 2 567 120 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(21) Anmeldenummer: **11713223.3**

(22) Anmeldetag: **31.03.2011**

(51) Int Cl.:
*F16F 15/131* *(2006.01)* *F16F 15/134* *(2006.01)*
*F16H 45/02* *(2006.01)* *F16F 7/10* *(2006.01)*
*F16F 15/14* *(2006.01)*

(86) Internationale Anmeldenummer:
**PCT/EP2011/055013**

(87) Internationale Veröffentlichungsnummer:
**WO 2011/138095 (10.11.2011 Gazette 2011/45)**

(54) **DREHMOMENTÜBERTRAGUNGSBAUGRUPPE, INSBESONDERE HYDRODYNAMISCHER DREHMOMENTWANDLER, FLUIDKUPPLUNG ODER NASSLAUFENDE KUPPLUNG**

TORQUE TRANSMISSION ASSEMBLY, IN PARTICULAR HYDRODYNAMIC TORQUE CONVERTER, FLUID COUPLING OR WET-RUNNING CLUTCH

ENSEMBLE DE TRANSMISSION DE COUPLE, NOTAMMENT CONVERTISSEUR DE COUPLE HYDRODYNAMIQUE, EMBRAYAGE HYDRAULIQUE OU EMBRAYAGE HUMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2010 DE 102010028735**

(43) Veröffentlichungstag der Anmeldung:
**13.03.2013 Patentblatt 2013/11**

(73) Patentinhaber: **ZF Friedrichshafen AG**
**88038 Friedrichshafen (DE)**

(72) Erfinder:
• **SUDAU, Jörg**
**97464 Niederwerrn (DE)**
• **STÜRMER, Armin**
**97517 Rannungen (DE)**
• **LOTZE, Rüdiger**
**97421 Schweinfurt (DE)**
• **KRÜGER, Thomas**
**12683 Berlin (DE)**
• **DROTT, Christoph**
**63762 Grossostheim/Ringheim (DE)**

(56) Entgegenhaltungen:
WO-A1-2007/054052    WO-A1-2007/054059
DE-A1- 3 705 160     DE-A1- 10 236 752
DE-A1-102007 057 432  DE-A1-102008 057 648
DE-C1- 3 505 069     US-A- 4 569 668
US-A- 4 844 224

EP 2 567 120 B1

## Beschreibung

Die vorliegende Erfindung betrifft eine Drehmomentübertragungsbaugruppe, beispielsweise ausgebildet in Form eines hydrodynamischen Drehmomentwandlers, einer Fluidkupplung oder einer nasslaufenden Kupplung gemäß dem Oberbegriff des Anspruchs 1.

Derartige Drehmomentübertragungsbaugruppen werden im Antriebsstrang von Fahrzeugen dazu genutzt, ein Drehmoment zwischen einem Antriebsaggregat, beispielsweise einer Brennkraftmaschine, und einem dann folgenden Bereich eines Antriebsstrangs, beispielsweise einem Getriebe, zu übertragen. In einem derartigen Antriebsstrang treten verschiedene Schwingungsanregungen auf, die beispielsweise ausgelöst sein können durch die Zündfrequenz einer Brennkraftmaschine, somit also mit deren Drehzahl in Zusammenhang stehen. Um derartige Schwingungsanregungen bzw. Drehungleichförmigkeiten im Antriebsstrang so weit als möglich zu eliminierten, werden Torsionsschwingungsdämpferanordnungen eingesetzt, die im Allgemeinen eine Primärseite und eine Sekundärseite sowie eine dazwischen wirkende Dämpferfederanordnung umfassen. Es hat sich gezeigt, dass insbesondere im Bereich niedriger Drehzahlen, beispielsweise von weniger als 1000 U/min, mit derartigen Torsionsschwingungsdämpferanordnungen, welche auch zwei oder mehrere seriell wirkende Torsionsschwingungsdämpfereinheiten umfassen können, eine ausreichende Schwingungsentkopplung nicht gewährleistet werden kann.

Auch so genannte drehzahladaptive Tilger sind im Bereich geringer Drehzahlen aufgrund der vergleichsweise geringen kinetischen Energie, noch nicht in ausreichendem Maße entkoppelnd wirksam. Drehzahladaptive Tilger umfassen Schwingungsmassen, die in Umfangsrichtung entlang Führungsbahnen bewegbar sind. Die Führungsbahnen weisen im Allgemeinen einen Krümmungsradius auf, welcher kleiner ist als deren maximaler Abstand zur Drehachse. Eine Umfangsauslenkung dieser Schwingungsmassen erfolgt,somit im Fliehpotential und entgegen der diese nach außen beaufschlagenden Fliehkraft. Drehzahladaptive Tilger zeichnen sich somit primär dadurch aus, dass sie eine zur Drehzahl, proportionale Amplitudenreduzierung aufweisen, somit auf eine bestimmte Anregungsordnung abgestimmt sein können, gleichwohl jedoch im Bereich geringer Drehzahlen nur ungenügend wirksam sein können.

Die DE 102 36 752 A1 offenbart eine Drehmomentübertragungsbaugruppe gemäß dem Oberbegriff des Anspruchs 1. In dieser Drehmomentübertragungsbaugruppe ist eine Tilgeranordnung mit einer über eine Tilgerelastizität an die Drehmomentübertragungsbaugruppe angekoppelten Tilgermassenanordnung vorgesehen.

Es ist die Aufgabe der vorliegenden Erfindung, eine Drehmomentübertragungsbaugruppe, insbesondere hydrodynamischer Drehmomentwandler, Fluidkupplung oder nasslaufende Kupplung, bereitzustellen, mit welcher vor allem im Bereich geringer Drehzahlen eine verbesserte Schwingungsdämpfungscharakteristik erzielbar ist.

Erfindungsgemäß wird diese Aufgabe gelöst durch eine Drehmomentübertragungsbaugruppe, insbesondere hydrodynamischer Drehmomentwandler, Fluidkupplung oder nasslaufende Kupplung, umfassend eine Gehäuseanordnung, in der Gehäuseanordnung vorzugsweise eine Torsionsschwingungsdämpferanordnung mit einem mit der Gehäuseanordnung gekoppelten oder koppelbaren Eingangsbereich und einem mit einem Abtriebsorgan zu koppelnden Ausgangsbereich, ferner umfassend wenigstens eine Tilgeranordnung mit einer vermittels einer Tilgerelastizität an die Drehmomentübertragungsbaugruppe angekoppelten Tilgermassenanordnung, wobei für das Verhältnis eines Massenträgheitsmoments $MTM_T$ der Tilgeranordnung, insbesondere der Tilgermassenanordung, zu einem Massenträgheitsmoment $MTM_W$ der Drehmomentübertragungsbaugruppe ohne Tilgeranordnung gilt:

$$0,1 \leq MTM_T / MTM_W \leq 0,5.$$

Bei der erfindungsgemäßen Drehmomentübertragungsbaugruppe werden eine oder mehrere Tilgeranordnungen eingesetzt, die nach dem Prinzip eines Festfrequenztilgers aufgebaut sind. Durch die Auswahl der Masse der Tilgermassenanordnung einerseits und der Steifigkeit der Tilgerelastizität andererseits wird die Abstimmung auf eine vorgegebene Anregungsfrequenz möglich, so dass insbesondere auch im Bereich geringer Drehzahlen auftretende Schwingungsanregungen effizienter eliminiert werden können.

Beispielsweise kann vorgesehen sein, dass die Tilgerelastizität eine Elastomermaterialanordnung umfasst, wobei Gummi oder gummiähnliche Materialien sich aufgrund der sehr guten Haltbarkeit als vorteilhaft erwiesen haben.

Bei einer alternativen Variante kann die Tilgerelastizität eine Federanordnung, vorzugsweise Schraubenfederanordnung, umfassen. Der Einsatz einer derartigen im Allgemeinen aus Metall aufgebauten Tilgerelastizität ist insbesondere dann vorteilhaft, wenn diese Tilgerelastizität im Inneren der Gehäuseanordnung angeordnet ist und somit über die Betriebslebensdauer hinweg auch in einer derartigen Gehäuseanordnung im Allgemeinen enthaltenem Fluid, beispielsweise Öl, ausgesetzt ist.

Die wenigstens eine Tilgeranordnung kann an die Gehäuseanordnung angekoppelt sein, was deren Positionierung auch außerhalb des Gehäuses zulässt. Im Inneren des Gehäuses wird dann kein Bauraum für die Tilgeranordnung beansprucht.

Bei einer Variante kann vorgesehen sein, dass wenigstens eine Tilgeranordnung an die Torsionsschwingungsdämpferanordnung angekoppelt ist. Diese wenigstens eine Tilgeranordnung liegt somit im Inneren der Gehäuseanordnung, kann jedoch durch die Zusammenkopplung mit der Torsionsschwingungsdämpferanordnung in ein Schwingungssystem integriert werden, wodurch die Abstimmung auf bestimmte Anregungsfrequenzen verbessert werden kann.

Beispielsweise kann wenigstens eine Tilgeranordnung an dem

Eingangsbereich der Torsionsschwingungsdämpferanordnung oder/und den Ausgangsbereich derselben angekoppelt sein.

Bei einer hinsichtlich des beanspruchten Bauraums vorteilhaften Ausgestaltungsvariante wird vorgeschlagen, dass die Torsionsschwingungsdämpferanordnung eine Torsionsschwingungsdämpfeinheit mit einer Primärseite und einer gegen die Wirkung einer Dämpferfederanordnung um eine Drehachse bezüglich der Primärseite drehbaren Sekundärseite umfasst, wobei der Eingangsbereich der Torsionsschwingungsdämpferanordnung die Primärseite umfasst und der Ausgangsbereich der Torsionsschwingungsdämpferanordnung die Sekundärseite umfasst. In diesem Falle umfasst also die Torsionsschwingungsdämpferanordnung nur eine einzige Torsionsschwingungsdämpfeinheit.

Zur verbesserten Abstimmung auf die in einem Antriebsstrang auftretenden Drehungleichförmigkeiten kann weiter vorgesehen sein, dass die Torsionsschwingungsdämpferanordnung eine Mehrzahl von in Serie wirksamen Torsionsschwingungsdämpfeinheiten umfasst, wobei jede Torsionsschwingungsdämpfeinheit eine Primärseite und eine gegen die Wirkung einer Dämpferfederanordnung um eine Drehachse bezüglich der Primärseite drehbare Sekundärseite umfasst, wobei der Eingangsbereich der Torsionsschwingungsdämpferanordnung die Primärseite einer ersten der Torsionsschwingungsdämpfeinheiten umfasst, die Ausgangsseite der Torsionsschwingungsdämpferanordnung die Sekundärseite einer letzten der Torsionsschwingungsdämpfeinheiten umfasst und die Sekundärseite einer vorangehenden und die Primärseite einer nachfolgenden zweier aufeinander folgend angeordneten Torsionsschwingungsdämpfeinheiten wenigstens einen Teil einer Zwischenmassenanordnung bereitstellen.

Insbesondere dann, wenn die Torsionsschwingungsdämpferanordnung mehrere in Serie wirksame Torsionsschwingungsdämpfeinheiten mit dazwischen gebildeten Zwischenmassenanordnungen umfasst, kann weiter vorgesehen sein, dass wenigstens eine Tilgeranordnung an eine Zwischenmassenanordnung angekoppelt ist.

Bei einer besonders vorteilhaften Ausgestaltungsvariante kann die Drehmomentübertragungsbaugruppe ein Pumpenrad, im Allgemeinen bereitgestellt durch die oder an der Gehäuseanordnung, sowie ein in der Gehäuseanordnung angeordnetes Turbinenrad umfassen.

Um bei derartiger Ausgestaltung eine Funktionenverschmelzung und damit auch eine Reduzierung der erforderlichen Bauteile zu erreichen, wird vorgeschlagen, dass das Turbinenrad wenigstens einen Teil der Tilgermassenanordnung bereitstellt.

Das Turbinenrad kann an den Eingangsbereich oder den Ausgangsbereich der Torsionsschwingungsdämpfer angekoppelt sein. Bei Ausgestaltung mit mehreren seriell wirksamen Torsionsschwingungsdämpfeinheiten kann das Turbinenrad weiterhin auch an eine Zwischenmassenanordnung angekoppelt sein, was sich hinsichtlich der Schwingungsdämpfung als besonders vorteilhaft erwiesen hat.

Das Turbinenrad und die Tilgeranordnung können an die selbe Zwischenmassenanordnung angekoppelt sein. Weiterhin kann vorgegeben sein, dass zumindest eine Tilgeranordnung an das Turbinenrad angekoppelt ist und mithin über das Turbinenrad an die Torsionsschwingungsdämpferanordnung, also entweder den Eingangsbereich, den Ausgangsbereich oder ggf. eine Zwischenmassenanordnung derselben angekoppelt ist.

Bei einer alternativen Variante wird vorgeschlagen, dass die Zwischenmassenanordnung, an welche das Turbinenrad angekoppelt ist, keine Tilgeranordnung trägt.

Weiter kann vorgesehen sein, dass für ein Reibmoment $M_R$ der Tilgeranordnung, insbesondere der Tilgerelastizität, gilt:

$$M_R\,(n \leq n_G) \leq 7\ \text{Nm}$$

$$M_R\,(n > n_G) \geq 4\ \text{Nm},$$

wobei n die Drehzahl der Drehmomentübertragungsbaugruppe um die Drehachse ist und $n_G$ eine mit vorbestimmten Drehzahlabstand über einer der Eigenfrequenz der Tilgeranordnung entsprechenden Drehzahl liegende Grenzdrehzahl ist.

Es sei hier darauf hingewiesen, dass das Reibmoment hier die primär durch Coulombsche Reibung von Komponenten der Tilgeranordnung, insbesondere von Federn der Tilgerelastizität, an diese stützenden Bauteilen angesprochen ist. Durch die Auswahl des Reibmoments im angegebenen Bereich kann sichergestellt werden, dass bis zur Grenzdrehzahl die auftretende Reibung nicht groß genug ist, um die Tilgermassenanordung an einer Oszillation zu hindern. Bei Erreichen oder Überschreiten der Grenzdrehzahl wird jedoch die Reibung so groß, dass eine freie Oszillation der Tilgermassenanordnung praktisch nicht mehr möglich ist und diese dann im Wesentlichen nur noch als zusätzliche Masse wirksam ist.

Weiter wird vorgeschlagen, dass für ein Verhältnis einer axialen Breite $b_{KRL}$ eines mit dem Turbinenrad und dem Pumpenrad gebildeten Fluidkreislaufs zur radialen Höhe $h_{KRL}$ des Fluidkreislaufs gilt:

$$0,2 \leq b_{KRL} / h_{KRL} \leq 1,2.$$

Durch die Auswahl dieses Verhältnisses im angegebenen Bereich kann sichergestellt werden, dass ausreichend Bauraum im Inneren des Gehäuses zur Bereitstellung einer Tilgeranordnung bereitgestellt werden kann.

Weiter kann vorgesehen sein, dass für ein Verhältnis eines Durchmessers $\varnothing_{TF}$ von Federn der Tilgerelastizität zu deren radialen Abstand $RFN_{TF}$ bezüglich der Drehachse gilt:

$$0,1 \; \varnothing_{TF} / RFN_{TF} \leq 0,33.$$

Bei einer weiteren vorteilhaften Ausgestaltung wird vorgeschlagen, dass für ein Verhältnis eines radialen Abstands $RFN_{TF}$ von Federn der Tilgeranordnung bezüglich der Drehachse zum radialen Abstand $r_{TM}$ eines Flächenschwerpunkts eines Masseteils der Tilgermassenanordnung bezüglich der Drehachse gilt:

$$0,59 \leq RFN_{TF} / r_{TM} \leq 1,69.$$

Die vorliegende Erfindung betrifft ferner ein Antriebssystem, umfassend eine Mehrzylinderbrennkraftmaschine und eine mit einer Kurbelwelle der Mehrzylinderbrennkraftmaschine gekoppelte erfindungsgemäße Drehmomentübertragungsbaugruppe.

In einem derartigen Antriebssystem kann beispielsweise vorgesehen sein, dass für das Verhältnis eines Massenträgheitsmoments $MTM_T$ der Tilgeranordnung, insbesondere der Tilgermassenanordnung, zur Anzahl $n_{ZYL}$ der Zylinder der Mehrzylinderbrennkraftmaschine gilt:

$$0,0033 \; \text{kgm}^2 \leq MTM_T / n_{ZYL} \leq 0,1 \; \text{kgm}^2.$$

Weiter wird vorgeschlagen, dass für ein Verhältnis einer Steifigkeit $C_{TF}$ der Tilgerelastizität zur Anzahl $n_{ZYL}$ der Zylinder der Mehrzylinderbrennkraftmaschine gilt:

$$0,92 \; \text{Nm/°} \leq C_{TF} / n_{ZYL} \leq 12 \; \text{Nm/°}.$$

Bei einer weiteren besonders vorteilhaften Variante wird vorgeschlagen, dass für ein Verhältnis der einer Eigenfrequenz der Tilgeranordnung entsprechenden Drehzahl der Mehrzylinderbrennkraftmaschine zur Anzahl $n_{ZYL}$ der Zylinder der Mehrzylinderbrennkraftmaschine gilt:

$$100/\text{min} \leq n_{EF} / n_{ZYL} \leq 1200/\text{min}.$$

Es sei hier darauf hingewiesen, dass beispielsweise bei einer Vierzylinder-Brennkraftmaschine pro zwei Umdrehungen der Kurbelwelle die vier Zündungen in den Zylindern auftreten. Dies bedeutet, dass bei einer Drehzahl von 1000 Umdrehungen pro Minute eine Tilgeranordnung mit einer Eigenfrequenz von 2000 U/min im Bereich ihrer Eigenfrequenz zur Schwingung angeregt wird.

Die vorliegende Erfindung wird nachfolgend mit Bezug auf die beiliegenden Figuren detailliert erläutert. Es zeigen:

| | |
|---|---|
| Fig. 1 bis 6 | in prinzipartiger Darstellung verschiedene Alternativen einer Drehmomentübertragungsbaugruppe mit einem Turbinenrad, einer Tilgeranordnung und einer Torsionsschwingungsdämpferanordnung mit einer Torsionsschwingungsdämpfereinheit; |
| Fig. 7 bis 18 | in prinzipartiger Darstellung verschiedene Alternativen einer Drehmomentübertragungsbaugruppe mit einem Turbinenrad, einer Tilgeranordnung und einer Torsionsschwingungsdämpferanordnung mit zwei Torsionsschwingungsdämpfereinheiten; |
| Fig. 19 bis 38 | in prinzipartiger Darstellung verschiedene Alternativen einer Drehmomentübertragungsbaugruppe mit einem Turbinenrad, einer Tilgeranordnung und einer Torsionsschwingungsdämpferanordnung mit drei Torsionsschwingungsdämpfereinheiten; |
| Fig. 39 | eine prinzipielle Darstellung einer Drehmomentübertragungsbaugruppe mit einer außen daran angeordneten Tilgeranordnung; |
| Fig. 40 | eine Teillängsschnittansicht einer Drehmomentübertragungsbaugruppe gemäß Fig. 5; |
| Fig. 41 | eine Teillängsschnittansicht einer Drehmomentübertragungsbaugruppe gemäß Fig. 7; |
| Fig. 42 | eine Teillängsschnittansicht einer Drehmomentübertragungsbaugruppe gemäß Fig. 9; |
| Fig. 43 | eine Teillängsschnittansicht einer Drehmomentübertragungsbaugruppe gemäß Fig. 15; |
| Fig. 44 bis 52 | eine Teillängsschnittansicht der Drehmomentübertragungsbaugruppen gemäß Fig. 17; |
| Fig. 53 und 54 | eine Teillängsschnittansicht einer Drehmomentübertragungsbaugruppe gemäß Fig. 18; |
| Fig. 55 | eine in Form einer nasslaufenden Kupplungsanordnung ausgebildete Drehmomentübertragungsbaugruppe mit einer in der Gehäuseanordnung angeordneten Tilgeranordnung; |
| Fig. 56 bis 60 | eine Teillängsschnittansicht einer Drehmomentübertragungsbaugruppe gemäß Fig. 39; |
| Fig. 61 | in tabellarischer Darstellung verschiedene Größen oder Verhältnisse von Größen, welche bei einer Drehmomentübertragungsbaugruppe realisiert sein können; |
| Fig. 62 | in tabellarischer Darstellung eine Legende zu den in Fig. 61 dargestellten Größen; |
| Fig. 63 | eine der Fig. 44 entsprechende Darstellung einer Drehmomentübertragungsbaugruppe, welche verschiedene der in den tabellarischen Darstellungen der Fig. 61 und 62 enthaltenen Größen zeichnerisch veranschaulicht. |

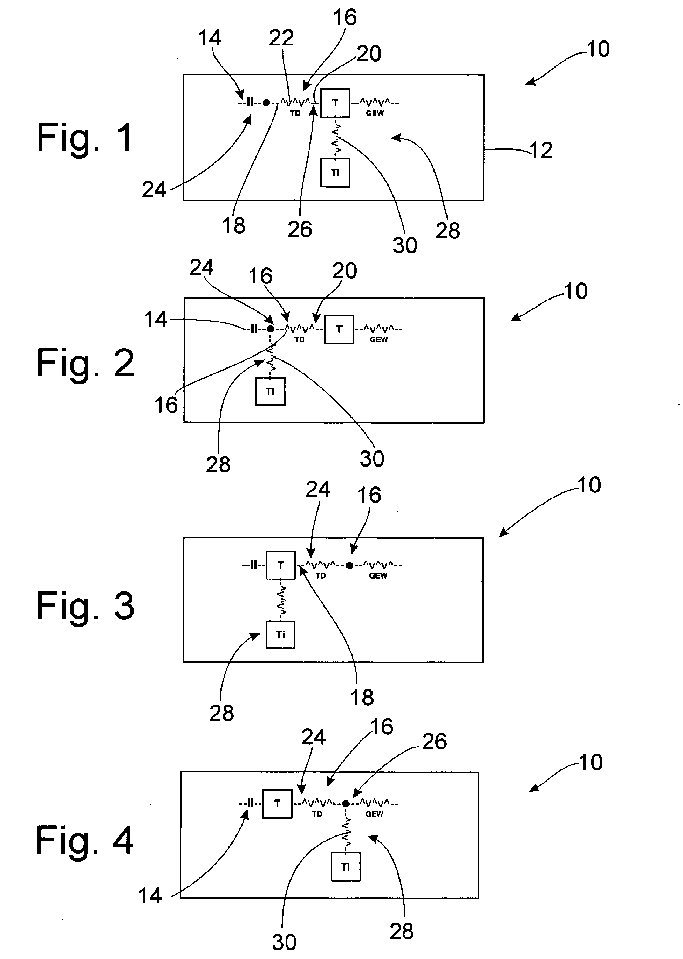

In Fig. 1 ist in prinzipartiger Darstellung eine Drehmomentübertragungsbaugruppe 10 z. B. in Form eines hydrodynamischen Drehmomentwandlers dargestellt. In einem nur prinzipiell dargestellten Gehäuse 12, in welches eine Getriebeeingangswelle GEW hineinreicht, und welches gleichzeitig auch ein Pumpenrad bereitstellt bzw. trägt, ist ein Turbinenrad T angeordnet. Dieses ist zur Drehmomentübertragung an die Getriebeeingangswelle GEW angekoppelt. Über eine Überbrückungskupplung 14 und eine Torsionsschwingungsdämpferanordnung 16 können im Überbrückungszustand das Turbinenrad T und damit die Getriebeeingangswelle GEW direkt, also unter Umgehung des Fluidkreislaufs, an das Gehäuse 12 angekoppelt werden.

Die Torsionsschwingungsdämpferanordnung 16 umfasst bei diesem Aufbau eine einzige Torsionsschwingungsdämpfereinheit TD mit einer Primärseite 18, einer Sekundärseite 20 und einer dazwischen wirksamen Dämpferfederanordnung 22. Es sei hier darauf hingewiesen, dass im Allgemeinen diese Dämpferfederanordnung eine Mehrzahl von in Umfangsrichtung aufeinander folgenden oder/und ineinander geschachtelten Dämpferfedern, also beispielsweise Schraubendruckfedern, umfasst. Grundsätzlich kann die Dämpferfederanordnung jedoch auch Federn anderer Art, also beispielsweise Gasdruckfedern oder durch verformbare, elastische Materialblöcke oder dergleichen bereitgestellte Federelemente, umfassen. Da die Torsionsschwingungsdämpferanordnung 16 nur die einzige Torsionsschwingungsdämpfereinheit TD umfasst, stellt deren Primärseite 18 im Wesentlichen auch einen Eingangsbereich 24 der Torsionsschwingungsdämpferanordnung bereit. Die Sekundärseite 20 der Torsionsschwingungsdämpfereinheit TD stellt im Wesentlichen auch einen Ausgangsbereich 26 der Torsionsschwingungsdämpferanordnung 16 bereit. Der Eingangsbereich 24 ist über die Überbrückungskupplung 14 an das Gehäuse 12 ankoppelbar. Der Ausgangsbereich 26 ist mit dem Turbinenrad T zur gemeinsamen Drehung um eine in der Fig. 1 nicht dargestellte Drehachse verbunden.

Es sei in diesem Zusammenhang darauf hingewiesen, dass im Sinne der vorliegenden Erfindung mit den Ausdrücken "Eingangsbereich" und "Ausgangsbereich" eine Zuordnung verschiedener Funktionsgruppen gewählt ist, welche dem Drehmomentenfluss im Antriebszustand, also im Zugzustand, entspricht. In diesem Zustand wird ein Drehmoment von einem Antriebsaggregat, also beispielsweise einer Brennkraftmaschine, über das Gehäsue 12 eingeleitet und im Überbrückungszustand über den Eingangsbereich 24 zum Ausgangsbereich 26 und das Turbinenrad T weiter geleitet. Es ist selbstverständlich, dass im Schubzustand, also beispielsweise Motorbremszustand, der Drehmomentenfluss in umgekehrter Richtung verläuft und von der Getriebeeingangswelle über den Ausgangsbereich 26 aufgenommen, zum Eingangsbereich 24 weitergeleitet und über die Überbrückungskupplung 14 auf das Gehäuse 12 und somit das Antriebsaggregat übertragen wird.

In Fig. 1 erkennt man weiterhin eine Tilgeranordnung 28 mit einer Tilgermassenanordnung Ti und einer eine Schwingung der Tilgermassenanordnung Ti zulassenden Tilgerelastizität 30. In dem in Fig. 1 dargestellten Aufbau ist die Tilgeranordnung 28 mit ihrer Tilgerelastizität 30, beispielsweise ausgebildet mit einer Federanordnung, vorzugsweise einer Mehrzahl von Schraubendruckfedern, an das Turbinenrad T bzw. die Sekundärseite 20 der Torsionsschwingungsdämpfereinheit TD und somit auch den Ausgangsbereich 26 der Torsionsschwingungsdämpferanordnung 16 angekoppelt.

Bei dieser Ausgestaltungsvariante können im Antriebsstrang auftretende Schwingungen bzw. Drehungleichförmigkeiten direkt an demjenigen Bereich gedämpft bzw. verringert werden, an welchen die Getriebeeingangswelle GEW angekoppelt ist. Somit wird der Tilgeranordnung 28 ein vergleichsweise geringes Entkopplungspotential abverlangt, was eine kompakte Ausgestaltung gestattet.

Eine Tilgeranordnung 28, wie sie vorangehend mit Bezug auf die Fig. 1 prinzipiell beschrieben wurde, also eine Tilgeranordnung mit einer nicht im Drehmomentenfluss liegenden Tilgermassenanordnung Ti und einer ebenfalls nicht im Drehmomentenfluss liegenden Tilgerelastizität 30, beispielsweise in Form einer Federanordnung, ist als Festfrequenztilger aufgebaut und ermöglicht somit die Auslegung auf eine kritische Anregungsfrequenz beispielsweise in einem Drehzahlbereich unter 1000 U/min.

Eine Abwandlung der Drehmomentübertragungsbaugruppe 10 ist in Fig. 2 gezeigt. Es sei darauf hingewiesen, dass bei den in Folge auch beschriebenen Abwandlungen Bauteile oder Baugruppen, welche vorangehend bereits erläuterten Baugruppen hinsichtlich Aufbau bzw. Funktionalität entsprechen, mit den gleichen Bezugszeichen bezeichnet sind. Weiter wird in der Folge lediglich auf die für die jeweiligen Abwandlungen relevanten Änderungsaspekte eingegangen.

In Fig. 2 ist bei an den Ausgangsbereich 20 der Torsionsschwingungsdämpferanordnung 16 angekoppeltem Turbinenrad T die Tilgeranordnung 28 mit ihrer Tilgerfederanordnung 30 an den Eingangsbereich 24 der Torsionsschwingungsdämpferanordnung 16, mithin also die Primärseite 18 der Torsionsschwingungsdämpfereinheit TD angekoppelt. Im Momentenfluss - bezogen auf den Zugzustand - liegt also die Tilgeranordung 30, ohne direkt in den Momentenfluss eingekoppelt zu sein, also ohne dass ein Drehmoment über die Tilgeranordnung 28 übertragen wird, unmittelbar hinter der Überbrückungskupplung 14. Bei Anregungen über der Eigenfrequenz der Tilgeranordnung 28 wirkt diese als zusätzliche Masse, was die Regelfähigkeit der Überbrückungskupplung 14 in diesem Drehzahlbereich bzw. Anregungsfrequenzbereich verbessert. Weiterhin ist die Gefahr des Anschlagens der Tilgermassenanordnung Ti an dafür vorgesehenen Endanschlägen verringert.

Bei der in Fig. 3 dargestellten Variante der Drehmomentübertragungsbaugruppe 10 ist das Turbinenrad T an den Eingangsbereich 24 der Torsionsschwingungsdämpferanordnung 16 angekoppelt. Auch die Tilgeranordnung 28 ist an diesen Eingangsbereich 24, also die Primärseite 18 der Torsionsschwingungsdämpfereinheit TD, angekoppelt. Ebenso wie bei der in Fig. 1 gezeigten Darstellung kann diese Ankopplung direkt oder über das Turbinenrad T erfolgen. Hinsichtlich der Wirksamkeit der Tilgeranordnung 28 weist diese Variante die gleichen Vorteile auf, wie vorangehend mit Bezug auf die Fig. 3 beschrieben. Durch das Verlagern des Turbinenrads T zum Eingangsbereich 24 wird die primärseitige Masse der Torsionsschwingungsdämpfereinheit TD erhöht. Da bei den in den Fig. 2 und 3 gezeigten Ausgestaltungsvarianten die Ankopplung im Wesentlichen direkt an die Antriebswelle eine Antriebsaggregats, also beispielsweise eine Kurbelwelle, erfolgt, ohne dass wesentliche weitere Elastizitäten zwischengeschaltet sind, ist ein höheres Tilgungspotential erforderlich, als in dem in Fig. 1 dargestellten Beispiel.

Die Fig. 4 zeigt eine Anordnung, bei welcher bei an den Eingangsbereich 24 der Torsionsschwingungsdämpferanordnung 16 angekoppeltem Turbinenrad T der Tilgeranordnung 28 über ihre Tilgerfederanordnung 30 an den Ausgangsbereich 26 der Torsionsschwingungsdämpferanordnung 16 angekoppelt ist. Ein Vorteil dieser Variante ist, dass im überkritischen Bereich der Torsionsschwingungsdämpferanordnung 16, also bei Drehzahlen bzw. Schwingungsanregungen, die über der Resonanzfrequenz der Torsionsschwingungsdämpferanordnung 16 liegen, die Tilgeranordnung 28 als einfache sekundärseitige Masse wirksam ist.

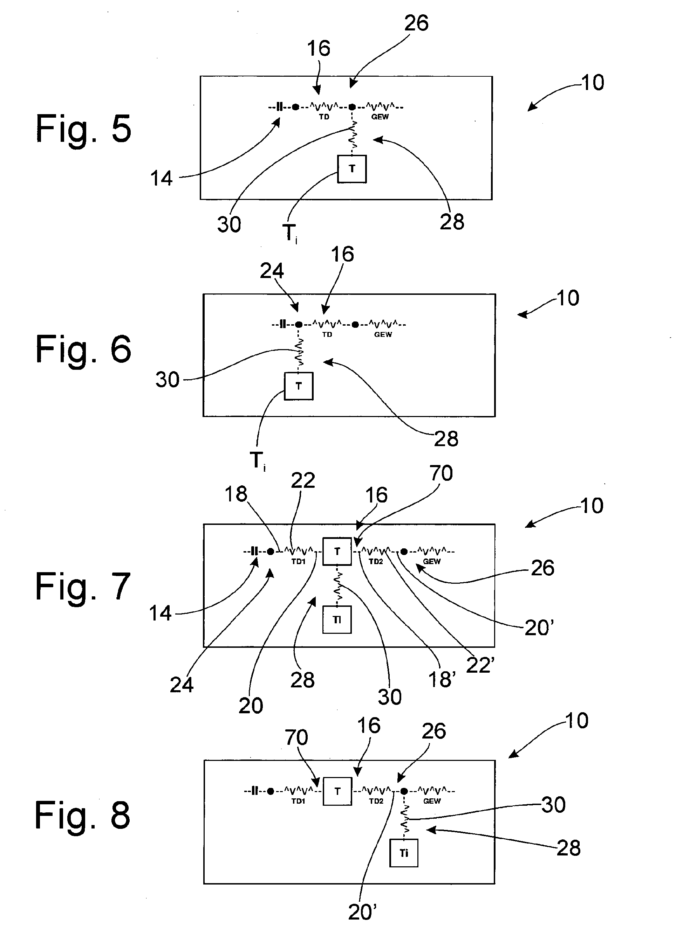

Die Fig. 5 zeigt eine Ausgestaltungsvariante, bei welcher die Tilgeranordnung 28 an den Ausgangsbereich 26 der Torsionsschwingungsdämpferanordnung 16 angekoppelt ist. Die Tilgermassenanordnung Ti ist bei diesem Ausgestaltungsbeispiel im Wesentlichen durch das Turbinenrad T bereitgestellt. Dies bedeutet, dass lediglich ein Bauraumerfordernis für das Bereitstellen der Tilgerelastizität 30 besteht. Die Tilgermassenanordnung Ti ist aufgrund der Verwendung des Turbinenrads T dafür bauraumneutral.

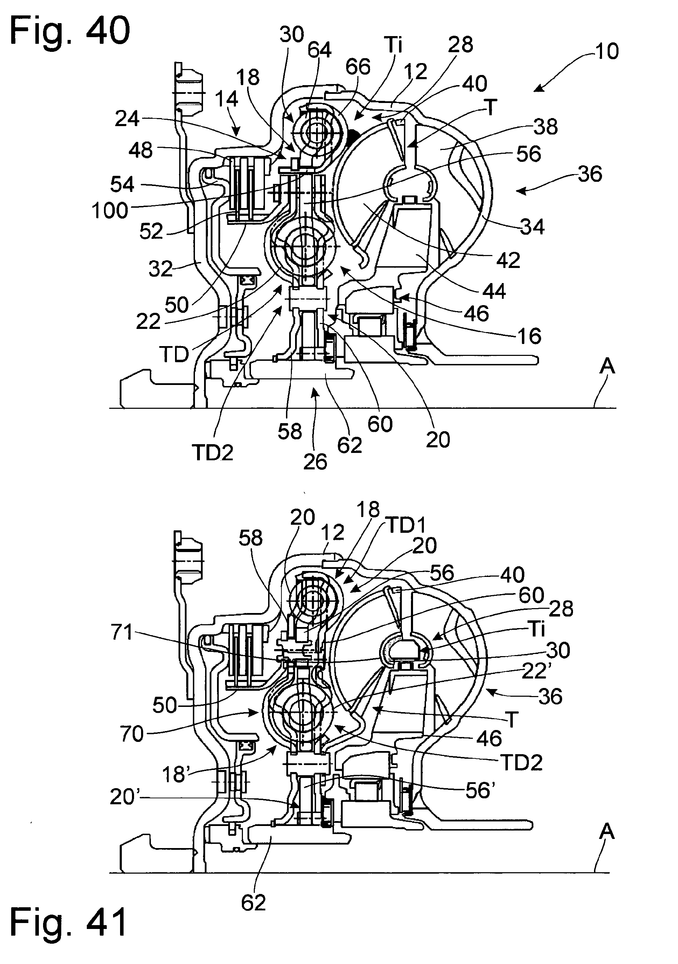

Eine konstruktive Ausgestaltung der in Fig. 5 dargestellten Drehmomentübertragungsbaugruppe 10 ist in Fig. 40 dargestellt. Man erkennt das Gehäuse 12 mit seiner antriebsseitigen Gehäuseschale 32 und seiner abtriebsseitigen Gehäuseschale 34, welche gleichzeitig auch eine Pumpenradschale für ein somit in das Gehäuse 12 integriertes Pumpenrad 36 bereitstellt. An der Innenseite dieser Gehäuseschale 34 sind in Umfangsrichtung aufeinander folgend die Pumpenradschaufeln 38 getragen. Im Inneren des Gehäuses 12 ist das Turbinenrad T mit seiner Turbinenradschale 40 und den daran getragenen Turbinenradschaufeln 42 angeordnet. Zwischen dem radial inneren Bereich der Turbinenradschaufeln 42 und der Pumpenradschaufeln 38 liegen die Leitradschaufeln 44 eines allgemein mit 46 bezeichneten Leitrads.

Die Überbrückungskupplung 14 umfasst eine Mehrzahl von mit dem Gehäuse 12 gekoppelten Reibelementen oder Lamellen 48 sowie eine Mehrzahl von mit einem Innenlamellenträger 50 gekoppelten Reibelementen oder Lamellen 52. Durch einen Kupplungskolben 54 sind diese gegeneinander pressbar, um den Überbrückungszustand herzustellen.

Die Torsionsschwingungsdämpferanordnung 16 bzw. die Torsionsschwingungsdämpfereinheit TD desselben umfasst als Primärseite 18 zwei beispielsweise aus Blechmaterial aufgebaute Deckscheibenelemente 58, 60, die vermittels einer Mehrzahl von Nietbolzen mit dem Innenlamellenträger 50 fest verbunden sind und somit auch einen wesentlichen Bestandteil des Eingangsbereichs 24 bereitstellt. Die Sekundärseite 20 der Torsionsschwingungsdämpfereinheit, welche im Wesentlichen auch den Ausgangsbereich 26 der Torsionsschwingungsdämpferanordnung 16 bereitstellt, umfasst ein Zentralscheibenelement 56. Am Zentralscheibenelement 56 einerseits und den Deckscheibenelementen 58, 60 andererseits sind Umfangsabstützbereiche für die Dämpferfedern der Dämpferfederanordnung 22 ausgebildet, gegen deren Wirkung die Primärseite 18 und die Sekundärseite 20 sich bezüglich einander um die Drehachse A verdrehen können.

Das Zentralscheibenelement 56 ist durch verzahnungsartigen Eingriff mit einer Abtriebsnabe 62 gekoppelt, welche wiederum drehfest an die Getriebeeingangswelle angekoppelt werden kann.

In seinem radial äußeren Bereich stellt das Zentralscheibenelement 56 eine Mehrzahl von Umfangsabstützbereichen für in Umfangsrichtung aufeinander folgende Federn 64, vorzugsweise Schraubendruckfedern, der Tilgerelastizität 30 bereit. Ein deckscheibenartiges Kopplungselement 66 stellt ebenfalls Umfangsabstützbereiche für die Federn 64 der Tilgerelastizität 30 bereit und ist bezüglich der Zentralscheibenelements 56 um die Drehachse A unter Kompression der Federn 64 der Tilgerelastizität 30 auch nach Art einer Schwingungsdämpferanordnung bewegbar bzw. kann einer Umfangsschwingung ausführen.

Das Kopplungselement 66 ist durch Verschweißung mit der Turbinenradschale 40 des Turbinenrads T fest verbunden und bildet somit im Wesentlichen zusammen mit diesem die Tilgermassenanordnung Ti der Tilgeranordnung 28. Durch die Anbindung der Tilgermassenanordnung Ti über die Federn 64, also die Tilgerelastizität 30, an das Zentralscheibenelement 56 erfolgt gleichzeitig eine Ankopplung an die Sekundärseite 26 der Torsionsschwingungsdämpfereinheit TD. Da im Wandlerbetriebszustand das Antriebsdrehmoment über die Tilgeranordnung 28 geleitet werden muss, ist diese im Wandlerzustand im Wesentlichen als Torsionsschwingungsdämpfereinheit zu der dann folgenden Torsionsschwingungsdämpfereinheit TD seriell wirksam, wird also eine Tilgerfunktionalität im Wesentlichen nicht entfalten. Die Federn 64 der Tilgerelastizität 30 müssen jedoch so ausgelegt sein, dass sie das Antriebsdrehmoment bzw. das gewandelte Antriebsdrehmoment übertragen können. Andernfalls müssen die Anschläge 100 der Tilgerelastizität 30 das zu übertragende Restmoment, das nicht von der Tilgerelastizität 30 übertragen werden kann, aufnehmen und weiterleiten. Im Überbrückungszustand, also bei eingerückter Überbrückungskupplung, wird über das Turbinenrad T nahezu kein Drehmoment übertragen, so dass dann die Tilgeranordnung 28 mit ihrer Tilgermassenanordnung Ti als solche wirksam sein kann, d. h. in den Drehmomentübertragungsweg nicht eingeschaltet ist.

Bei dieser Ausgestaltungsvariante ist das Turbinenrad T selbst nicht zentriert, so dass die Zentrierung in axialer und radialer Richtung im Wesentlichen über die Tilgerelastizität 30, also die Federn 64 bzw. das Kopplungselement 66, und das Zentralscheibenelement 56 erfolgt. Selbstverständlich könnte die Turbinenradschale 40 auch weiter nach radial innen geführt sein und dort beispielsweise auf der Abtriebsnabe 62 axial oder/und radial gelagert sein.

Obgleich bei dieser Ausgestaltungsform die Tilgermassenanordnung Ti aufgrund der vergleichsweise leichten Bauweise des Turbinenrads T eine geringe Gesamtmasse aufweisen wird, bewegt sich das Turbinenrad T mit seinen Turbinenradschaufeln 42 dann, wenn Schwingungsanregungen auftreten, in dem das Gehäuse 12 füllenden Öl, was die Eigenfrequenz der Tilgeranordnung 28 beeinflusst.

Die Fig. 6 zeigt eine prinzipartige Darstellung einer Variante der Drehmomentübertragungsbaugruppe 10, bei welcher das im Wesentlichen auch die Tilgermassenanordnung Ti bereitstellende Turbinenrad T über die Tilgerelastizität 30 an den Eingangsbereich 24 der Torsionsschwingungsdämpferanordnung 16 angekoppelt ist. Auch hier kann zusätzlicher Bauraum für eine ansonsten vorzusehende Tilgermasse eingespart werden. Im Wandlerbetrieb und in einem Betrieb bei Anregung über die Eigenfrequenz bzw. Tilgungsfrequenz der Tilgeranordnung 28 ist der Torsionsschwingungsdämpferanordnung 16 als Turbinendämpfer wirksam.

Vorangehend wurden mit Bezug auf die Fig. 1 bis 6 Ausgestaltungsvarianten beschrieben, bei welchen die Torsionsschwingungsdämpferanordnung eine einzige Torsionsschwingungsdämpfereinheit umfasst. Nachfolgend werden Varianten beschrieben, bei welchen die Torsionsschwingungsdämpferanordnung zwei Torsionsschwingungsdämpfereinheiten umfasst.

So erkennt man in Fig. 7 ein Ausgestaltungsbeispiel der Drehmomentübertragungsbaugruppe 10, bei welcher eine erste Torsionsschwingungsdämpfereinheit TD1 mit ihrer Primärseite 18 an die Überbrückungskupplung 14 angekoppelt ist und mithin im Wesentlichen auch den Eingangsbereich 24 der Torsionsschwingungsdämpferanordnung 16 bereitstellt. Die Sekundärseite 20 der ersten Torsionsschwingungsdämpfereinheit TD1 ist über deren Dämpferfederanordnung 22 bezüglich der Primärseite 18 drehbar. Weiterhin ist die Sekundärseite 20 der ersten Torsionsschwingungsdämpfereinheit TD1 an eine Primärseite 18' einer in Serie wirksamen zweiten Torsionsschwingungsdämpfereinheit TD2 angebunden bzw. stellt zusammen mit dieser eine Zwischenmassenanordnung 70 bereit. Eine Sekundärseite 20' der zweiten Torsionsschwingungsdämpferanordnung TD2 ist an die Getriebeeingangswelle GEW angekoppelt und stellt im Wesentlichen auch den Ausgangsbereich 26 der Torsionsschwingungsdämpferanordnung 16 bereit. Die Primärseite 18' und die Sekundärseite 20' sind gegen die Wirkung der Dämpferfederanordnung 22' der zweiten Torsionsschwingungsdämpfereinheit TD2 bezüglich einander um die Drehachse drehbar.

Bei der in Fig. 7 dargestellten Ausgestaltungsvariante ist das Turbinenrad T an die Zwischenmassenanordnung 70 angekoppelt bzw. stellt einen wesentlichen Masseanteil derselben bereit. Im Überbrückungszustand sind die beiden Torsionsschwingungsdämpfereinheiten TD1 und TD2 zueinander seriell wirksam. Im Drehmomentwandlerzustand, also dem Zustand, in welchem ein Drehmoment im Wesentlichen über das Turbinenrad T übertragen wird, ist lediglich der Torsionsschwingungsdämpfer TD2 als Turbinendämpfer wirksam.

Die Tilgeranordnung 28 ist über ihre Tilgerelastizität 30 an die Zwischenmassenanordnung 70 entweder parallel zum Turbinenrad T oder beispielsweise auch über das Turbinenrad T angekoppelt.

In einem Drehzahlbereich, in welchem eine Schwingungsanregung mit der Eigenfrequenz bzw. Tilgungsfrequenz der Tilgeranordnung 28 nicht erfolgt, erhöht dieses die Masse der Zwischenmassenanordnung 70, was sich auf das Schwingungsdämpfungsverhalten vorteilhaft auswirkt.

Eine konstruktive Ausführung der in Fig. 7 prinzipiell dargestellten Anordnung ist in Fig. 41 gezeigt. Bei dieser Ausgestaltungsvariante ist das Zentralscheibenelement 56 in seinem radial inneren Bereich an den Innenlamellenträger 50 fest angebunden und bildet mithin im Wesentlichen die Primärseite 18 der Torsionsschwingungsdämpfereinheit TD1. Der radial äußere Bereich der beiden Deckscheibenelemente 58, 60 stellt im Wesentlichen die Sekundärseite 20 der Torsionsschwingungsdämpfereinheit TD1 bereit, welche gegen die Wirkung der Dämpferfederanordnung 20, also beispielsweise mehrere in Umfangsrichtung aufeinander folgende Schraubendruckfedern, bezüglich der Primärseite 18 verdrehbar ist.

Der radial innere Bereich der beiden Deckscheibenelemente 58, 60 bildet im Wesentlichen auch die Primärseite 18' der in Serie angeordneten bzw. wirksamen und radial innerhalb der ersten Torsionsschwingungsdämpfereinheit TD1 liegenden zweiten Torsionsschwingungsdämpfereinheit TD2. Ein weiteres Zentralscheibenelement 56' bildet im Wesentlichen die Sekundärseite 20' der Torsionsschwingungsdämpfereinheit TD2 und ist gegen die Wirkung der Dämpferfederanordnung 22' bezüglich der Primärseite 18' drehbar. Radial innen ist das Zentralscheibenelement 56 an die Abtriebsnabe 62 angekoppelt.

Die Turbinenradschale 40 des Turbinenrads T ist hier weiter nach radial innen gezogen und durch Nietbolzen an die im Wesentlichen auch die Zwischenmassenanordnung 70 bereitstellenden Deckscheibenelemente 58, 60 angebunden. Somit trägt das Turbinenrad T zur Erhöhung der Masse der Zwischenmassenanordnung 70 bei und bildet mithin auch einen Bestandteil derselben.

Die Tilgeranordnung 28 ist in dem ringkanalartig ausgebildeten Volumenbereich zwischen dem Turbinenrad T, dem Pumpenrad 36 und dem Leitrad 46 angeordnet. Sie umfasst eine ringartig oder segmentartig in Umfangsrichtung sich um die Drehachse A erstreckende Tilgermassenanordnung Ti, welche an das Turbinenrad T, insbesondere eine Turbinenradinnenschale 71, über die Tilgerelastizität 30 angebunden ist. Die Tilgerelastizität 30 ist hier mit Elastomermaterial, beispielsweise Gummi oder gummiartiges Material, ausgebildet, und ermöglicht eine Umfangsrelativschwingung zwischen dem Turbinenrad T und der Tilgermassenanordnung Ti.

Ein besonderer Vorteil dieser Ausgestaltungsvariante ist, dass für die Tilgeranordnung 28 kein zusätzlicher Bauraum vorgehalten werden muss. Weiterhin verbessert das Anordnen der Tilgeranordnung 28 in dem angegebenen Volumenbereich das Zirkulationsverhalten des Fluidkreislaufs im hydrodynamischen Drehmomentwandler. Insbesondere sind an beiden Seiten des Leitrades 46 geringere Strömungsverluste vorhanden.

In Fig. 8 ist eine weitere Variante der Drehmomentübertragungsbaugruppe 10 in prinzipartiger Darstellung dargestellt. Man erkennt wieder das zwischen den beiden Torsionsschwingungsdämpfereinheiten TD1 und TD2 der Torsionsschwingungsdämpferanordnung 16 positionierte Turbinenrad T. Die Tilgeranordnung 28 ist über ihre Tilgerelastizität 30 an den Ausgangsbereich 26 der Torsionsschwingungsdämpferanordnung 16, mithin also die Sekundärseite 20' der zweiten Torsionsschwingungsdämpfereinheit TD2 angekoppelt. Somit ist die Tilgeranordnung 28 unmittelbar vor der Getriebeeingangswelle GEW wirksam, so dass das Dämpfungspotential beider Torsionsschwingungsdämpfereinheiten TD1 und TD2 optimal genutzt werden kann. In einem Anregungsfrequenzbereich über der Eigenfrequenz der Tilgeranordnung 28 ist diese als zusätzliche Masse wirksam. Weiterhin ist es möglich, durch Einführen einer Reibkraft die Tilgeranordnung 28 zu deaktivieren, also eine Schwingung der Tilgermassenanordnung Ti zu unterbinden, um diese auch in anderen Betriebszuständen lediglich die Masseerhöhung zu nutzen. Dies trifft selbstverständlich auch für die anderen vorangehend bereits erläuterten bzw. nachfolgend noch zu erläuternden

Varianten zu.

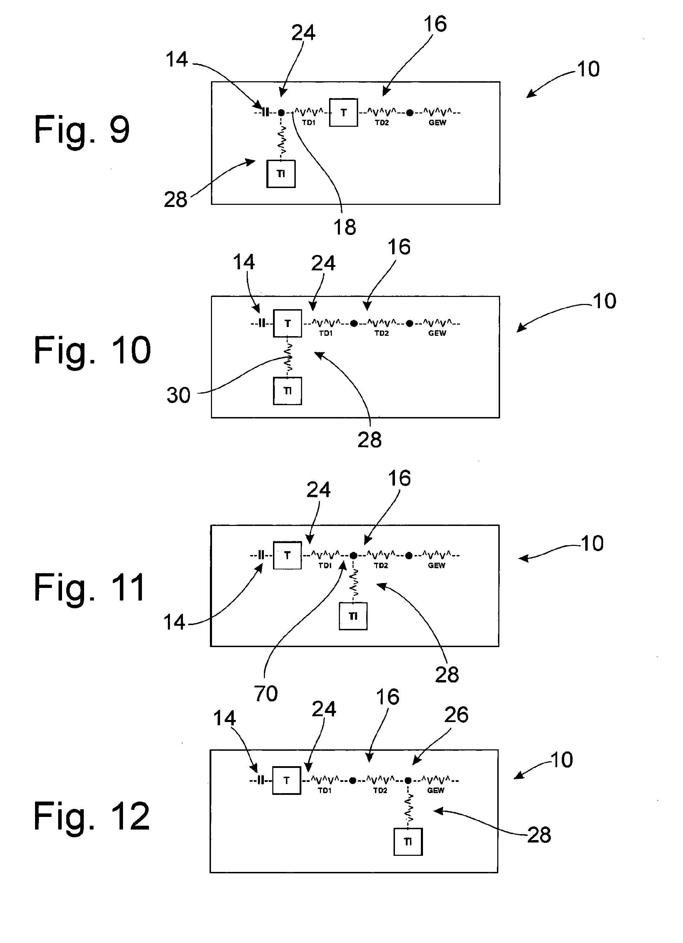

Bei der in Fig. 9 gezeigten Variante der Drehmomentübertragungsbaugruppe 10 ist die Tilgeranordnung 28 an den Eingangsbereich 24 der Torsionsschwingungsdämpferanordnung 16 und mithin die Primärseite 18 der auf die Überbrückungskupplung 14 unmittelbar folgenden ersten Torsionsschwingungsdämpfereinheit TD1 angekoppelt.

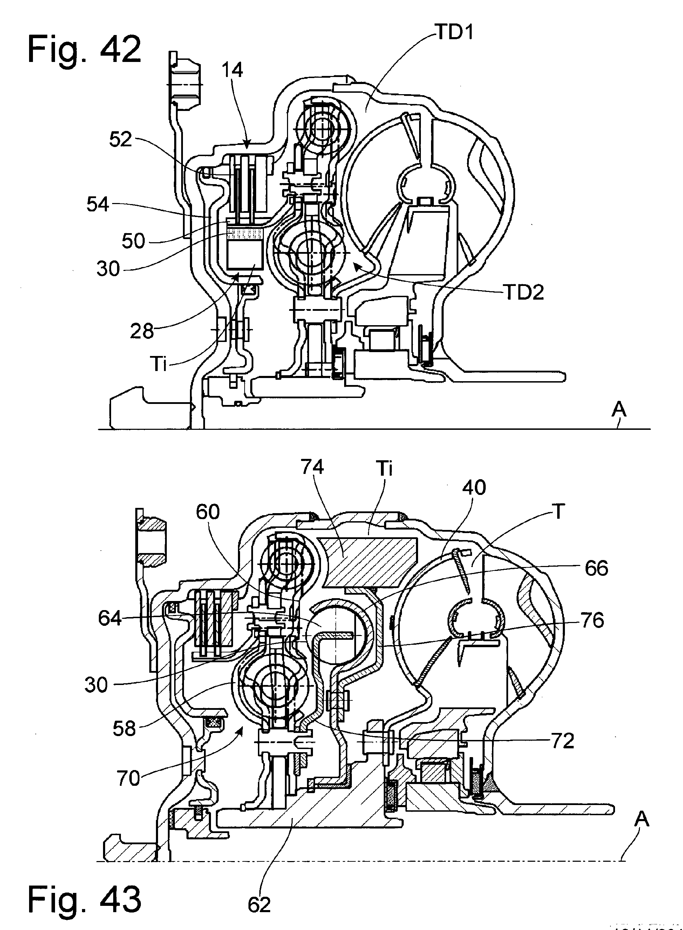

Eine konstruktive Ausführung hierzu ist in Fig. 42 gezeigt. Man erkennt die an den Innenumfangsbereich des Innenlamellenträgers 50 angekoppelte Tilgeranordnung 28. Diese umfasst eine ringartig oder ringsegmentartig um die Drehachse A sich erstreckende Tilgermassenanordnung Ti, welche über die Tilgerelastizität 30 an den Innenlamellenträger 50 angebunden ist. Auch hier ist die Tilgerelastizität 30 vorzugsweise aus Elastomermaterial aufgebaut. Ein Vorteil dieser Variante ist der geringe Bauraumbedarf, da der radial innerhalb des Innenlamellenträgers 50 in demjenigen Bereich, in welchem dieser die Reibelemente 52 trägt, vorhandener Raum genutzt werden kann.

In Fig. 10 ist eine Variante der Drehmomentübertragungsbaugruppe 10 gezeigt, bei welcher das Turbinenrad T an den Eingangsbereich 24 der Torsionsschwingungsdämpferanordnung 16 angekoppelt ist. Die Tilgeranordnung 28 ist gleichermaßen an den Eingangsbereich 24 angekoppelt, beispielsweise parallel zum Turbinenrad T, oder, wie dargestellt, über das Turbinenrad T. In einem Frequenzbereich über der Tilgungsfrequenz bzw. Eigenfrequenz der Tilgeranordnung 28 wirkt diese zur Erhöhung der primärseitigen Masse der Torsionsschwingungsdämpfereinheit TD1. Dies verbessert die Regelfähigkeit der Überbrückungskupplung 14 in diesem Frequenz- bzw. Drehzahlbereich. Da das Turbinenrad T im Drehmomentenfluss vor den beiden Torsionsschwingungsdämpfereinheiten TD1 und TD2 liegt, kann deren Dämpfungspotential im Wandlerbetrieb vollständig ausgenutzt werden. Diese Lösung ist aufgrund der Anordnung der Elastizitäten besonders bei relativ weicher Getriebeeingangswelle interessant.

Bei der in Fig. 11 gezeigten Variante ist bei weiterhin an den Eingangsbereich 24 angekoppeltem Turbinenrad T die Tilgeranordnung 28 an die Zwischenmassenanordnung 70 zwischen den beiden Torsionsschwingungsdämpfereinheit TD1 und TD2 angekoppelt. Dies bedeutet, dass im Frequenzbereich über ihrer Eigenfrequenz die Tilgeranordnung 28 zur Masseerhöhung der Zwischenmassenanordnung 70 beiträgt.

In Fig. 12 ist das Turbinenrad T an den Eingangsbereich 24 der Torsionsschwingungsdämpferanordnung 16 angekoppelt dargestellt, während die Tilgeranordnung 28 an den Ausgangsbereich 26 angekoppelt ist. Hier ist die Tilgeranordnung 28 also wieder direkt vor der Getriebeeingangswelle GEW angeordnet, was eine sehr effektive Ausnutzung des Dämpfungspotentials der beiden seriell wirksamen Torsionsschwingungsdämpfereinheiten TD1 und TD2 gestattet. Über der Eigenfrequenz der Tilgeranordnung 28 trägt diese zur Masseerhöhung am Ausgangsbereich 26 bei. Die Positionierung des Turbinenrads T am Eingangsbereich 24, also unmittelbar angrenzend an die Überbrückungskupplung 14, bringt Regelvorteile beim Ansteuern der Überbrückungskupplung 14 mit sich.

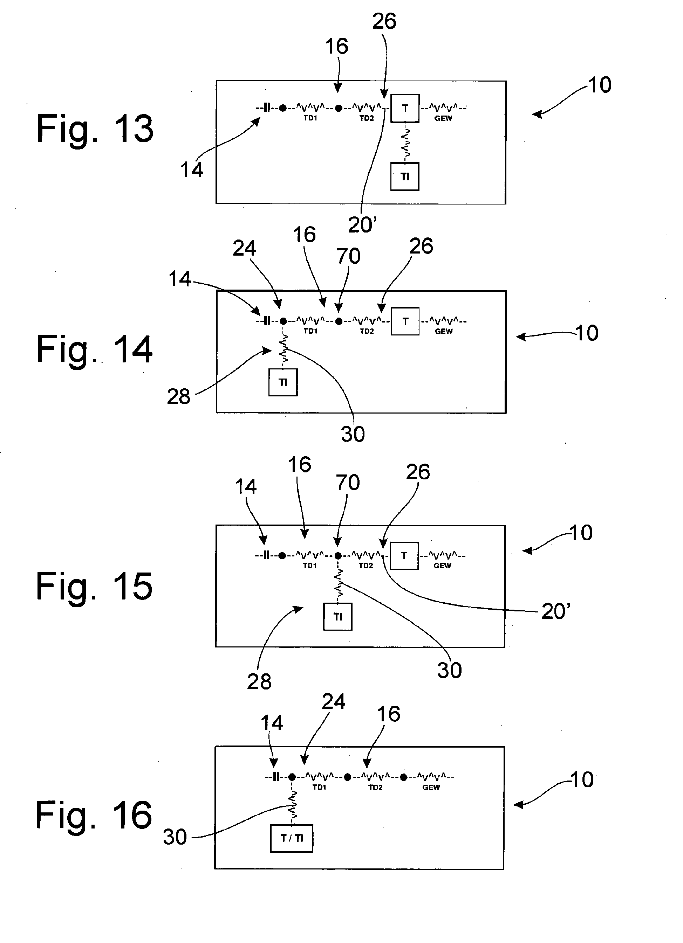

Die Fig. 13 zeigt eine Variante, bei welcher das Turbinenrad T an den Ausgangsbereich 26 der Torsionsschwingungsdämpferanordnung 16, mithin also die Sekundärseite 20' der zweiten Torsionsschwingungsdämpfereinheit TD2 angekoppelt ist. Diese Ausgestaltungsvariante eignet sich besonders bei Antriebssträngen mit vergleichsweise torsionssteifen Getriebeeingangswellen. Auch kann bei dieser Variante das Dämpfungspotential der beiden seriell wirksamen Torsionsschwingungsdämpfereinheiten TD1 und TD2 effizient genutzt werden.

In Fig. 14 ist eine Variante dargestellt, bei welcher das Turbinenrad T an den Ausgangsbereich 26 der Torsionsschwingungsdämpferanordnung 16 angekoppelt ist, während die Tilgeranordnung 28 an den Eingangsbereich 24 derselben angekoppelt ist. Dadurch, dass oberhalb der Eigenfrequenz der Tilgeranordnung 28 diese zur Erhöhung der trägen Masse am Eingangsbereich 24 beiträgt, wird die Regelbarkeit der Überbrückungskupplung 14 verbessert. Weiter gestattet die Positionierung des Turbinenrads T am Ausgangsbereich 26 die Bereitstellung der Funktionalität eines Zweimassenschwungrades.

Bei der in Fig. 15 gezeigten Variante ist die Tilgeranordnung 28 an die Zwischenmassenanordnung 70 zwischen den beiden Torsionsschwingungsdämpfereinheit TD1 und TD2 angekoppelt. Das Turbinenrad ist an den Ausgangsbereich 26 der Torsionsschwingungsdämpferanordnung 16 und mithin die Sekundärseite 20' der Torsionsschwingungsdämpfereinheit TD2 angekoppelt. Durch die Positionierung des Turbinenrads T am Ausgangsbereich 26 kann wieder eine Zweimassenschwungrad-Funktionalität realisiert werden. Weiter von Vorteil ist, dass im Anfahrzustand das Moment nicht über Anschläge der Tilgeranordnung 28 oder einer anderen Torsionsschwingungsdämpfereinheit zu übertragen ist. Außerhalb der Tilgerfrequenz bzw. Eigenfrequenz der Tilgeranordnung 28 ist diese zur Erhöhung der Masse der Zwischenmassenanordnung 70 wirksam.

Eine konstruktive Ausführung zu dieser Variante ist in Fig. 43 dargestellt. Man erkennt, dass das Turbinenrad T mit seiner Turbinenradschale 40 radial innen an die Abtriebsnabe 62 angebunden ist. Mit den beiden im Wesentlichen die Zwischenmassenanordnung 70 bereitstellenden Deckscheibenelementen 58, 60 ist ein Kupplungselement 72 fest verbunden, beispielsweise vermittels derjenigen Nietbolzen, welche auch die beiden Deckscheibenelemente 58, 60 im radial inneren Bereich fest miteinander koppeln. Dieses Kupplungselement 72 stellt Umfangsabstützbereiche für die Federn 64 der Tilgerelastizität 30 bereit. Das weitere Kopplungselement 66 stellt entsprechende Umfangsabstützbereiche bereit und ist radial innen axial und radial an der Abtriebsnabe 62 bezüglich dieser drehbar gelagert.

Die Tilgermassenanordnung Ti umfasst ein oder mehrere die Drehachse A ringartig oder segmentartig umgebende Masseteile 74, welche über ein oder mehrere Verbindungselemente 76 an das Kopplungselement 66 angebunden sind. Die Tilgermassenanordnung Ti umfasst also im Wesentlichen das oder die Masseteile 74, das oder die Verbindungselemente 76 sowie das Kopplungselement 66 und kann unter Kompression der Federn 64 in Umfangsrichtung bezüglich des Kopplungselements 72 und mithin der Zwischenmassenanordnung 70 schwingen. Durch das Anbinden des oder der Verbindungselemente 76 vermittels einer Nietverbindung an das Kopplungselement 66 kann das Schweißen von im Allgemeinen nitrierten Blechbauteilen vermieden werden. Da weiterhin der Großteil der Tilgermassenanordnung Ti, im Wesentlichen also die Masseteile 74, vergleichsweise weit radial außen angeordnet ist, wird ein hohes Tilgungspotential erzielt.

Die Fig. 16 zeigt eine Ausgestaltungsvariante, bei welcher die Tilgermassenanordnung Ti das Turbinenrad T umfasst und über die Tilgerelastizität 30 an den Eingangsbereich 24 der Torsionsschwingungsdämpferanordnung 16 angebunden ist. Die Tilgermassenanordnung Ti und das Turbinenrad T sind hier also im Wesentlichen starr miteinander verbunden was hinsichtlich des beanspruchten Bauraums vorteilhaft ist. Die Tilgerelastizität 30 ist so auszugestalten, dass im Wandlerbetrieb das über das Turbinenrad T übertragene Drehmoment aufgenommen bzw. weitergeleitet werden kann.

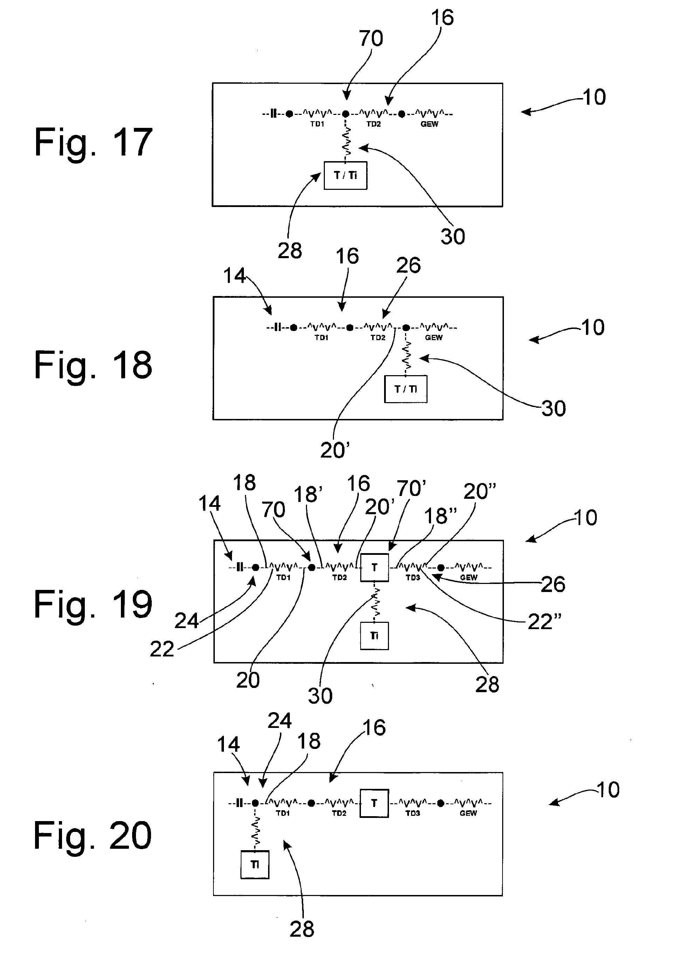

In Fig. 17 ist eine Variante gezeigt, in welcher die Tilgermassenanordnung Ti zusammen mit dem Turbinenrad T über die Tilgerelastizität 30 an den Zwischenmassenbereich 70 zwischen den beiden Torsionsschwingungsdämpfereinheiten TD1 und TD2 angebunden ist. Auch hier ergibt sich durch die Funktionenverschmelzung ein Bauraumvorteil. Ein weiterer Vorteil ist die Erhöhung der Masse der Zwischenmassenanordnung 70. In einem Frequenzbereich außerhalb der Eigenfrequenz der Tilgeranordnung 28 ist diese also lediglich als Zusatzmasse wirksam.

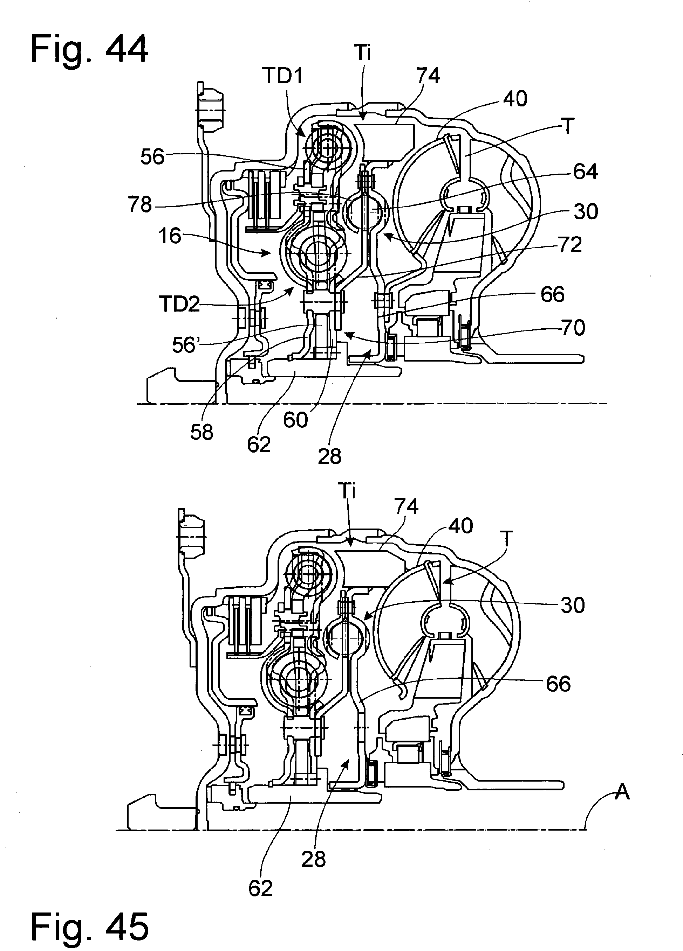

Eine konstruktive Ausführung hierzu ist in Fig. 44 dargestellt. Man erkennt die beiden seriell wirksamen und radial gestaffelten Torsionsschwingungsdämpfereinheiten TD1 und TD2. Die beiden Deckscheibenelemente 58, 60 bilden im Wesentlichen den Zwischenmassenbereich 70 der Torsionsschwingungsdämpferanordnung 16. Das Kopplungselement 72, welches in seinem radial äußeren Bereich Umfangsabstützbereiche für die Federn 64 der Tilgerelastizität 30 bereitstellt, ist radial weiter innen an die Zwischenmassenanordnung 70 beispielsweise durch Vernietung angebunden. Das an der Abtriebsnabe 62 axial oder/und radial gelagerte Kopplungselement 66 trägt beispielsweise durch Vernietung das Turbinenrad T an seiner Turbinenradschale 40 und bildet ebenfalls Umfangsabstützbereiche für die Federn 64 der Tilgerelastizität 30. Hierzu kann beispielsweise das Kopplungselement 66 zusammen mit einem weiteren daran durch Vernietung festgelegten Kopplungselement 78 einen die Federn 64 der Tilgerelastizität 30 umgebenden Volumenbereich begrenzen. Radial weiter außen ist an das Kopplungselement 66 ein Masseteil 74 oder mehrere Masseteile 74 beispielsweise durch Verschweißung angebunden, so dass die Tilgermassenanordnung Ti das Masseteil 74, das Kopplungselement 66 mit dem weiteren Kopplungselement 78 sowie das Turbinenrad T umfasst.

Eine Abwandlung hierzu ist in Fig. 45 gezeigt. Man erkennt, dass das Turbinenrad T nicht radial innen durch Vernietung an das Kopplungselement 66 angebunden ist, sondern in seinem radial äußeren Bereich bzw. einem radial äußeren Bereich der Turbinenradschale 40 an das Masseteil 74 bzw. die Masseteile 74 der Tilgermassenanordnung Ti durch Verschweißung angebunden ist. Ebenso wie bei der vorangehenden Ausgestaltungsvariante in Fig. 44 ist das Turbinenrad T über das Masseteil 66 bezüglich der Abtriebsnabe 62 und mithin der Drehachse A gelagert. Man erkennt, dass der radial außen durch das Masseteil 74 gefüllte Bauraum vergrößert ist, was zur Erhöhung der Masse der Tilgermassenanordnung Ti beiträgt.

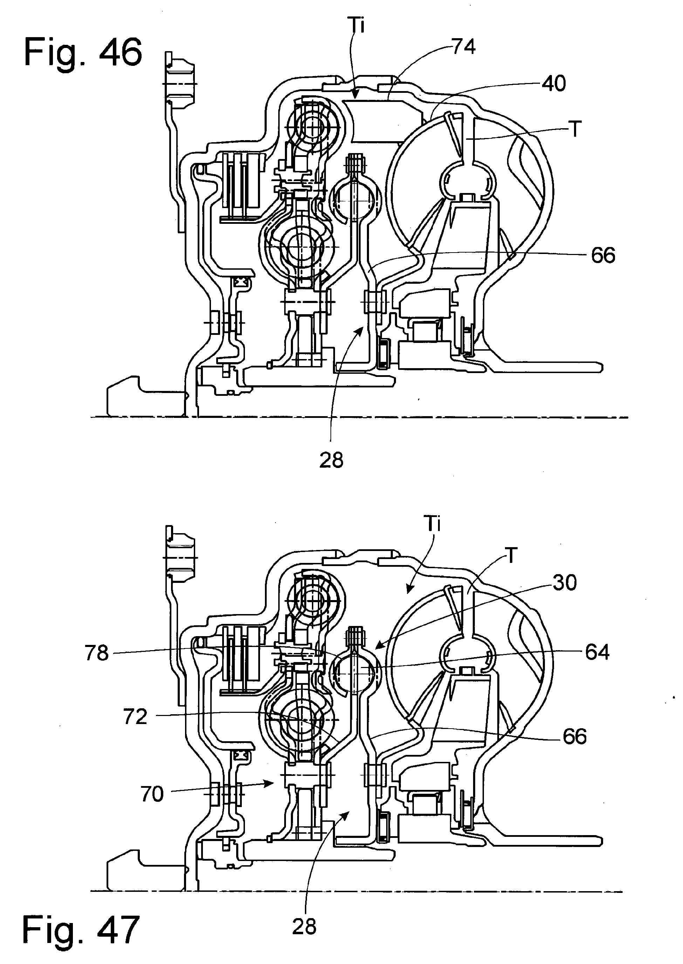

Die Fig. 46 zeigt eine Variante, bei welcher das Masseteil 74 oder ggf. mehrere Masseteile 74 radial außen an die Turbinenradschale 40 des Turbinenrads T durch Verschweißung angebunden sind. Das Turbinenrad T trägt über seine Anbindung radial weiter innen an das Kopplungselement 66 das oder die Masseteile 74 der Tilgermassenanordnung Ti. Dies vermeidet eine Schweißverbindung zwischen dem Masseteil 74 und einem im Allgemeinen als nitriertes Blechteil ausgebildeten Kopplungselement. Zusammen mit dem radial weit außen liegenden Masseteil 74 trägt das Turbinenrad T zu einer vergleichsweise großen Masse der Tilgermassenanordnung Ti bei.

Bei der in Fig. 47 dargestellten Anordnung sind im Vergleich zu der Ausgestaltungsform gemäß Fig. 46 keine weiteren die Masse erhöhenden Bauteile, also keine Masseteile 74, vorhanden. Die Tilgermassenanordnung Ti der Tilgeranordnung 28 ist hier im Wesentlichen durch das Turbinenrad T und das Kopplungselement 66 bereitgestellt. Dies gestattet eine Positionierung der Federn 64, also der Tilgerelastizität 30, weiter radial außen, so dass ein größeres Federvolumen bereitgestellt werden kann. Weiterhin erhöht sich mit einer Verlagerung der Federn 64 weiter nach radial außen die auf diese einwirkende Fliehkraft und somit die insbesondere an den Kopplungselementen 66 und 78 auftretende Reibkraft. Dies bedeutet, dass bei Erreichen einer Grenzdrehzahl die Reibung so groß werden kann, dass die Tilgungsfunktionalität nicht mehr erfüllt wird, also die Tilgermassenanordnung Ti im Wesentlichen nicht mehr frei bezüglich der Zwischenmassenanordnung 70 schwingen wird und zur Erhöhung der Zwischenmassenanordnung 70 beiträgt. Die negativ wirkende Schwingungsanregung des Tilgers erfolgt aufgrund der Reibung nicht.

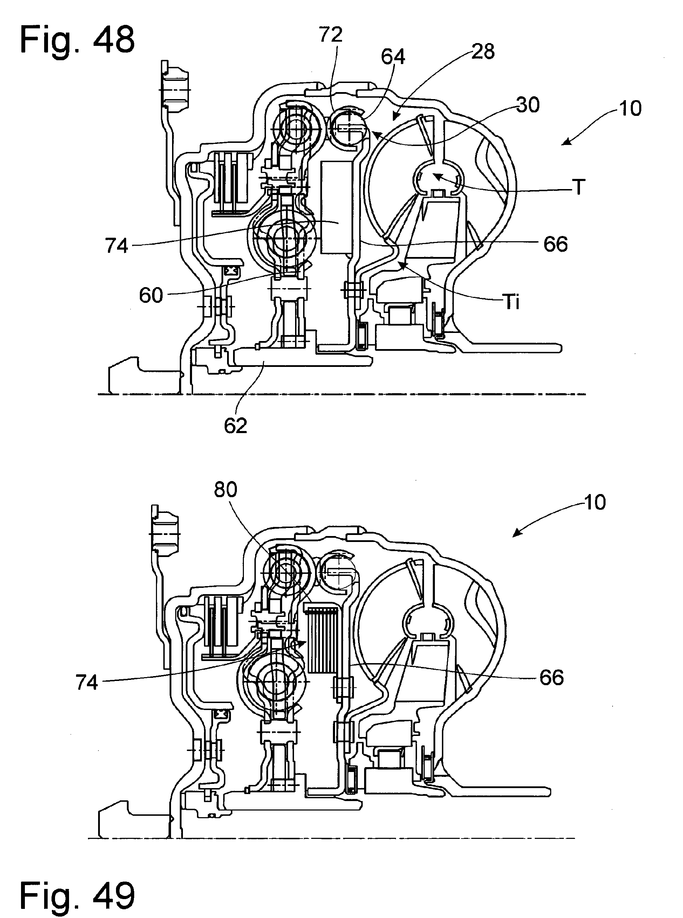

Bei der in Fig. 48 gezeigten Ausgestaltungsvariante der Drehmomentübertragungsbaugruppe 10 ist das zur Ankopplung der Tilgeranordnung 28 dienende Kopplungselement 72 so ausgebildet, dass es die Federn 64 der Tilgerelastizität 30 über ihren Umfang umgibt. Weiter ist diese Kopplungselement 72 an den radial äußeren Bereich des Deckscheibenelements 60 beispielsweise durch Verschweißung oder Vernietung angebunden. Das Kopplungselement 66 erstreckt sich nach radial innen und ist auf der Abtriebsnabe 62 axial oder/und radial gelagert. In seinem radial mittleren Bereich trägt das Kupplungselement 66 ein oder mehrere in Umfangsrichtung aufeinander folgende Masseteile 74 und bildet zusammen damit und auch dem Turbinenrad T im Wesentlichen die Tilgermassenanordnung Ti. Auch hier wird aufgrund der Positionierung der Federn 74 vergleichsweise weit radial außen unter Ausnutzung der im Rotationsbetrieb fliehkraftbedingt und bei höherer Drehzahl zunehmenden Reibwirkung ein Abschalten der Tilgeranordnung 28 erreicht.

Die Fig. 49 zeigt eine der Fig. 48 ähnliche Ausgestaltungsvariante der Drehmomentübertragungsbaugruppe 10. Hier ist das Masseteil 74, welches am radial mittleren Bereich des Kopplungselements 66 angebracht ist, durch eine Mehrzahl von in axialer Richtung aufeinander folgenden Scheiben, beispielsweise bogen- oder ringartigen Blechsegmenten, bereitgestellt. Diese sind in ihrem Außenumfangsbereich mit einer Verzahnung ausgebildet und in Drehkopplungseingriff mit einem am Kopplungselement 66 beispielsweise durch Vernieten festgelegten, winkelartig ausgebildeten Träger 80. Den axialen Zusammenhang bildet ein am axial sich erstreckenden Abschnitt festgelegter Sicherungsring. Dieses mit mehreren Scheiben ausgebildete Masseteil 74 ist vergleichsweise kostengünstig herstellbar und hinsichtlich seiner Gesamtmasse in Anpassung an die erforderliche Dämpfungscharakteristik variierbar.

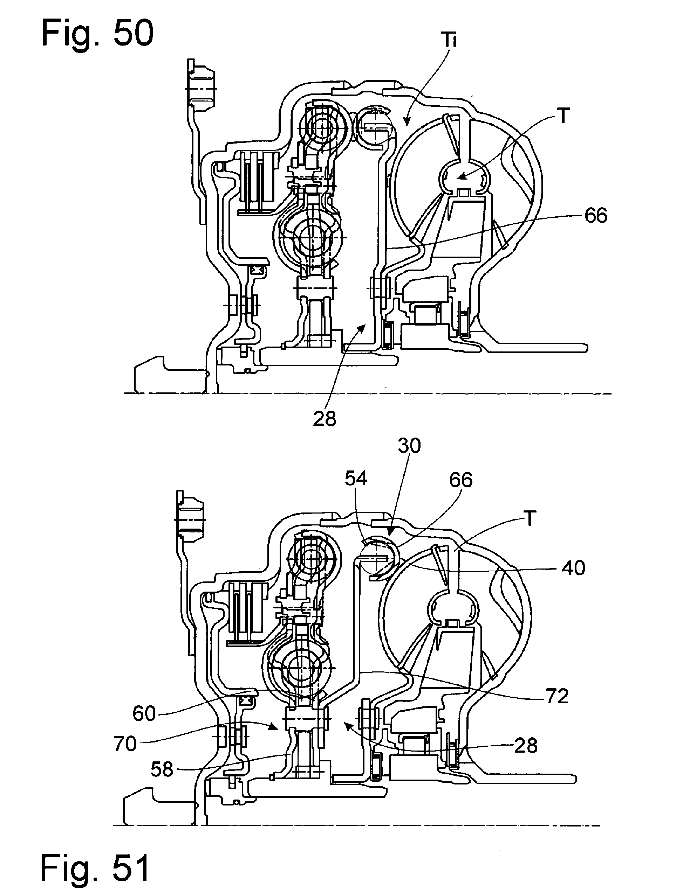

In Fig. 50 ist eine Ausgestaltungsvariante gezeigt, welche im Wesentlichen dem in den Fig. 48 und 49 Gezeigten entspricht. Hier ist jedoch am Kopplungselement 66 kein zusätzliches Masseteil vorgesehen. Die Tilgermassenanordnung Ti ist im Wesentlichen durch das Turbinenrad T und das Kopplungselement 66 bereitgestellt.

Die Fig. 51 zeigt eine Variante, bei welcher das an das Turbinenrad T angebundene Kopplungselement 66 die Federn 64 der Tilgerelastizität 30 über den Umfang umgreift. Das Kopplungselement 66 kann beispielsweise durch Verschweißung an der Turbinenradschale 40 festgelegt sein. Das an die Zwischenmassenanordnung 70 angebundene Kopplungselement 72 steht radial außen in Umfangsabstützeingriff mit den Federn 64 und erstreckt sich nach radial innen und ist in seinem radial inneren Bereich durch Vernietung mit den beiden Deckscheibenelementen 58, 60 fest verbunden. Bei gleichwohl vergleichsweise weit radial außen angeordneten Federn 64 der Tilgerelastizität 30 kann die Anbindung des Kopplungselements 72 durch Verschweißung erfolgen, was bei Ausgestaltung desselben bzw. auch der Deckscheibenelemente 58, 60 als nitrierte Bleche vorteilhaft ist.

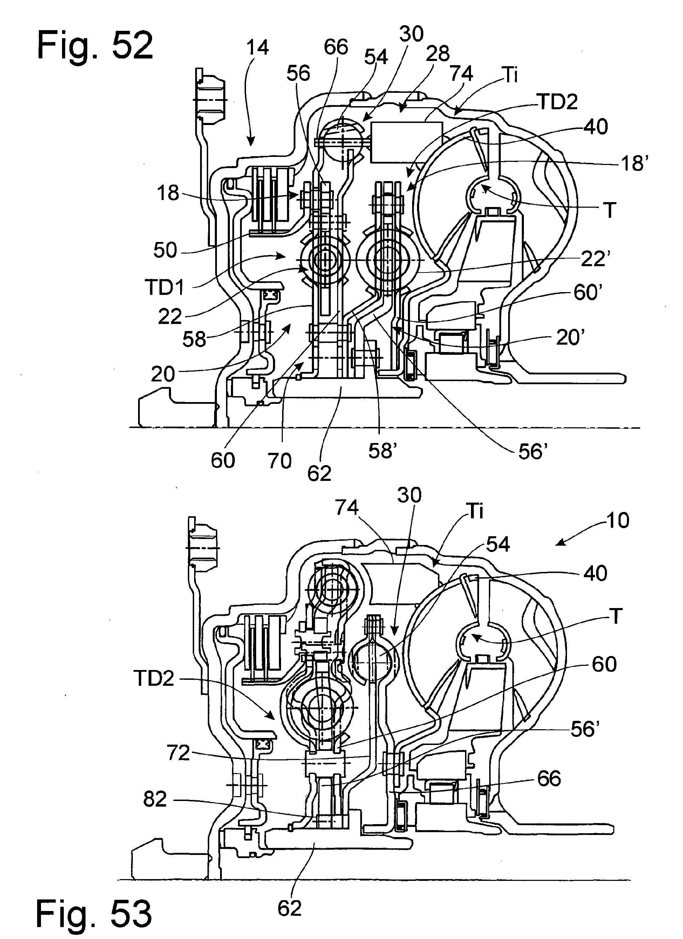

Die Fig. 52 zeigt eine Variante, bei welcher die beiden Torsionsschwingungsdämpfereinheiten TD1 und TD2 nicht radial gestaffelt, sondern axial aufeinander folgend angeordnet sind. Der Innenlamellenträger 50 der Überbrückungskupplung 14 ist mit dem Zentralscheibenelement 56, also der Primärseite 18 der der Überbrückungskupplung 14 axial näher positionierten Torsionsschwingungsdämpfereinheit TD1 beispielsweise durch Vernietung fest verbunden. Die beiden Deckscheibenelemente 58, 60 der Torsionsschwingungsdämpfereinheit TD1 sind radial innen durch Vernietung fest miteinander verbunden. Ein Deckscheibenelement 58' der Torsionsschwingungsdämpfereinheit TD2 ist im Bereich dieser Nietverbindung auch an die beiden Deckscheibenelemente 58, 60 der Torsionsschwingungsdämpfereinheit TD1 angebunden. Die beiden Deckscheibenelemente 58' und 60' der Torsionsschwingungsdämpfereinheit TD2 sind radial außen, also radial außerhalb der Dämpferfederanordnung 22', durch Vernietung miteinander fest verbunden. Während die beiden Deckscheibenelemente 58, 60 der Torsionsschwingungsdämpfereinheit TD1 deren Sekundärseite 20 bereitstellen, stellen die beiden Deckscheibenelemente 58', 60' die Primärseite 18' der Torsionsschwingungsdämpfereinheit TD2 bereit. Das Zentralscheibenelement 56' bildet im Wesentlichen dann die Sekundärseite 20' der Torsionsschwingungsdämpfereinheit TD2, welche durch Vernietung an die Abtriebsnabe 62 angebunden ist. Man erkennt, dass bei dieser Ausgestaltungsvariante die beiden Dämpferfederanordnungen 22 und 22' näherungsweise auf gleichem radialen Niveau liegen.

Zur Ankopplung der Tilgeranordnung 28 sind die beiden Deckscheibenelemente 58, 60, welche zusammen mit den Deckscheibenelementen 58', 60' im Wesentlichen auch die Zwischenmassenanordnung bereitstellen, nach radial außen verlängert und bilden dort Umfangsabstützbereiche für die Federn 64 der Tilgerelastizität 30. Die Tilgermassenanordnung Ti umfasst im Wesentlichen ein oder mehrere Masseteile 74, das bzw. die an die Turbinenradschale 40 des Turbinenrads T angebunden sind. Ein oder mehrere Kopplungselemente 66 erstrecken sich in der anderen axialen Richtung ausgehend von dem Masseteil 74 oder den Masseteilen 74 zum Umfangsabstützeingriff mit den Federn 64. Das bzw. die Masseteile 74 stellen zusammen mit dem Turbinenrad T im Wesentlichen die Tilgermassenanordnung Ti bereit. Da hier sowohl die im Wesentlichen zur Masse der Tilgermassenanordnung Ti beitragenden Bauteile weit radial außen angeordnet sind, als auch die Tilgerelastizität 30, wird hier ein hervorragendes Tilgungspotential erreicht, wozu auch beiträgt, dass das Masseteil 74 bis unmittelbar an die Turbinenradschale 40 heranreicht und damit durch Verschweißung verbunden ist. Durch die Positionierung der Federn 64 der Tilgerelastizität 30 wird gleichzeitig auch sichergestellt, dass drehzahlabhängig deren Reibwechselwirkung hier insbesondere mit dem nach radial außen verlängerten Deckscheibenelement 58 variiert, so dass mit zunehmender Drehzahl die Wirksamkeit der Tilgeranordnung 28 abnimmt.

Eine weitere in prinzipieller Weise dargestellte Variation der erfindungsgemäßen Drehmomentübertragungsbaugruppe 10 ist in Fig. 18 gezeigt. Bei dieser Ausgestaltungsvariante sind die Tilgermassenanordnung Ti bzw. das dazu beitragende Turbinenrad T über die Tilgerelastizität 30 an den Ausgangsbereich 26 der Torsionsschwingungsdämpferanordnung 16, mithin also die Sekundärseite 20' der Torsionsschwingungsdämpfereinheit TD2 angekoppelt. Die Tilgermassenanordnung Ti sitzt hier zusammen mit dem Turbinenrad T direkt vor der Getriebeeingangswelle GEW. Neben dem Vorteil des geringen zusätzlichen Raumbedarfs wirken auch hier die zum Erhöhen der Tilgermasse vorgesehenen Baugruppen und das Turbinenrad T zu einer vergleichsweise großen Gesamtmasse der Tilgermassenanordnung Ti und entsprechend auch der Sekundärseite der Torsionsschwingungsdämpfereinheit TD2 zusammen. Diese Anordnung ist besonders für Antriebsstränge mit vergleichsweise steifer Getriebeeingangswelle geeignet.

Eine konstruktive Ausgestaltungsvariante hierzu ist in Fig. 53 gezeigt. Diese entspricht hinsichtlich ihres Aufbaus im Wesentlichen der vorangehend mit Bezug auf die Fig. 46 bereits erläuterten Variante. Im Unterschied dazu ist jedoch das radial außen mit den Federn 64 der Tilgerelastizität 30 zusammenwirkende Kopplungselement 72 weiter nach radial innen gezogen und ist in seinem radial inneren Bereich in Drehkopplungseingriff mit der Abtriebsnabe 62. Diese kann an ihrem Außenumfangsbereich eine Verzahnung 82 aufweisen, mit welcher einerseits eine Innenumfangsverzahnung am Zentralscheibenelement 56' der radial inneren Torsionsschwingungsdämpfereinheit TD2 in Drehkopplungseingriff steht und andererseits eine entsprechende Innenumfangsverzahnung am Kopplungselement 72. Auch das Deckscheibenelement 60 kann mit dieser Verzahnung 82 in Kämmeingriff stehen, jedoch mit Umfangsbewegungsspiel, um einen maximalen Auslenkungswinkel der zweiten Torsionsschwingungsdämpfereinheit TD2 zu definieren. Das oder ggf. mehrere Masseteile 74 sind radial außerhalb der Tilgerelastizität 30 durch Verschweißen an die Turbinenradschale 40 des Turbinenrads T angebunden, so dass der radial außerhalb der Feder 54 zur Verfügung stehende Bauraum sehr effizient zur Bereitstellung einer möglichst großen Gesamtmasse der Tilgermassenanordnung Ti beiträgt. Die radiale Zentrierung des Turbinenrads T erfolgt hier über das sich am Außenumfang der Abtriebsnabe 62 radial und ggf. auch axial abstützende Kopplungselement 66.

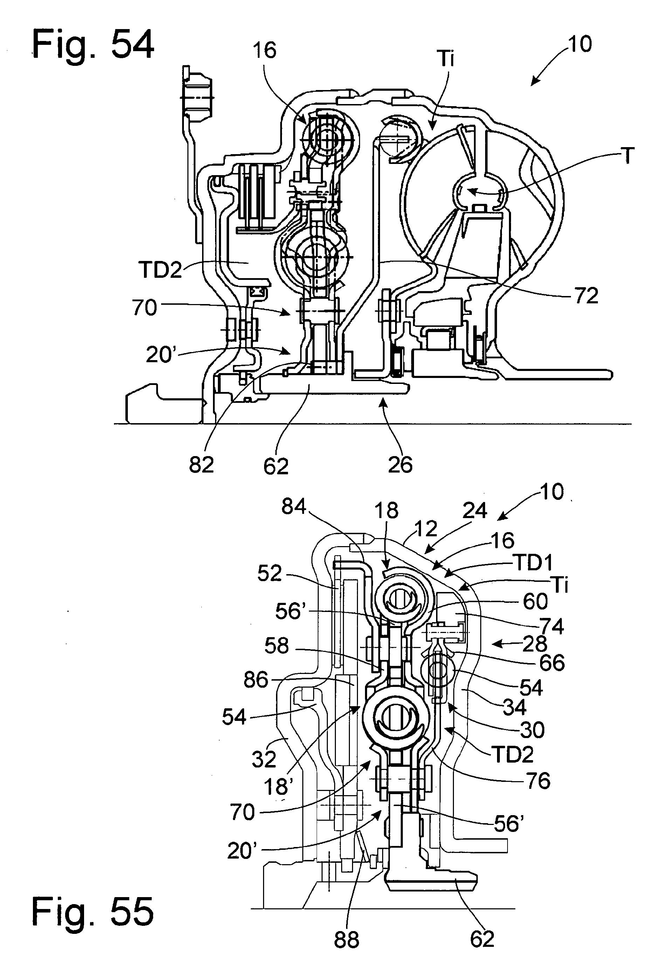

Die in Fig. 54 gezeigte Variante der Drehmomentübertragungsbaugruppe 10 entspricht im Wesentlichen der vorangehend bereits mit Bezug auf die Fig. 51 beschriebenen. Das zur Ankopplung an die Zwischenmassenanordnung 70 eingesetzte Kopplungselement 72 ist hier weiter nach radial innen gezogen und in Drehkopplungseingriff mit der Verzahnung 82 an der Abtriebsnabe 62. Auch hier ist also die Tilgermassenanordnung Ti, welche das Turbinenrad T umfasst, an die Sekundärseite 20' der zweiten bzw. radial inneren Torsionsschwingungsdämpfereinheit TD2 bzw. den Ausgangsbereich 26 der Torsionsschwingungsdämpferanordnung 16 angekoppelt.

Die radiale Zentrierung des Turbinenrads T erfolgt hier über einen nach radial innen bis zur Abtriebsnabe 62 gezogenen, ggf. als separates Bauteil ausgebildeten Bereich desselben, der auf der Abtriebsnabe 62 radial und ggf. auch axial gelagert ist.

Mit Bezug auf die Fig. 55 wird die Ausgestaltung einer Drehmomentübertragungsbaugruppe in Form einer nasslaufenden Kupplung beschrieben. Diese umfasst in einem Gehäuse 12 mit zwei Gehäuseschalen 32, 34 eine mit zwei Torsionsschwingungsdämpfereinheiten TD1 und TD2 ausgeführten Torsionsschwingungsdämpferanordnung 16. Ein Außenlamellenträger 84 ist durch Vernietung mit den beiden Deckscheibenelementen 58, 60 fest verbunden. Diese bilden im radial äußeren Bereich im Wesentlichen die Primärseite der Torsionsschwingungsdämpfereinheit TD1 bzw. auch den Eingangsbereich 24 der Torsionsschwingungsdämpferanordnung 16. In ihrem radial inneren Bereich bilden sie im Wesentlichen die Primärseite 18' der radial inneren Torsionsschwingungsdämpfereinheit TD2. Deren Sekundärseite 20' umfasst im Wesentlichen das Zentralscheibenelement 56', das durch Vernietung an einer Abtriebsnabe 62 festgelegt ist.

Der Außenlamellenträger 84 ist mit einem Reibelement bzw. einer Lamelle 52 drehfest gekoppelt. Diese ist axial zwischen der Gehäuseschale 32 und einem Anpresselement 86 zur Herstellung des Einkuppelzustands einklemmbar. Durch einen Kupplungskolben 54, welcher zusammen mit dem Anpresselement 86 den Innenraum des Gehäuses 12 in zwei Volumenbereiche unterteilt, wird es durch Einstellung der Druckverhältnisse und unter Ausnutzung der Vorspannkraft eine Vorspannfeder 88 möglich, durch mehr oder weniger starke Reibwechselwirkung einen Einkuppelzustand, einen Auskuppelzustand bzw. einen Schlupfzustand zu erreichen.

Die Tilgeranordnung 28 ist durch die die beiden Deckscheibenelemente 58, 60 radial innen fest verbindenden Nietbolzen an die Zwischenmassenanordnung 70 fest angebunden. Hierzu dient ein Kopplungselement 72, welches nach radial außen greift und in seinem radial äußeren Bereich Umfangsabstützbereiche für die Federn 54 der Tilgerelastizität 30 bereitstellt. Ein zwei Deckscheibenelemente umfassendes Kopplungselement 66 ist radial außen mit einem ringartigen bzw. mehreren in Umfangsrichtung aufeinander folgenden Masseteilen 74 beispielsweise durch Vernietung fest verbunden und stellt zusammen mit diesen im Wesentlichen die Tilgermassenanordnung Ti der Tilgeranordnung 28 bereit.

Es sei darauf hingewiesen, dass selbstverständlich auch die vorangehend mit Bezug auf den Einsatz in hydrodynamischen Drehmomentwandlern gezeigten konstruktiven Varianten sowohl hinsichtlich der Ausgestaltung als auch der Positionierung beispielsweise der Torsionsschwingungsdämpferanordnung, der Torsionsschwingungsdämpfereinheiten derselben bzw. der Tilgeranordnung bei einer derartigen nasslaufenden Kupplung Anwendung finden können. Auch lassen sich all diese Konstruktionsprinzipien bzw. konstruktiven Ausgestaltungen auf Fluidkupplungen übertragen bzw. dort einsetzen.

In Fig. 19 ist der Einsatz einer als Festfrequenztilger ausgebildeten Tilgeranordnung 28 mit einer Tilgermassenanordnung Ti bzw. einer Tilgerelastizität 30 bei einer Drehmomentübertragungsbaugruppe 10 gezeigt, bei welcher eine Torsionsschwingungsdämpferanordnung 16 mit drei in Serie wirksamen Torsionsschwingungsdämpfereinheiten TD1, TD2 und TD3 vorgesehen ist. Auch hier kann beispielsweise wieder der Einsatz in einem hydrodynamischen Drehmomentwandler, einer Fluidkupplung bzw. einer nasslaufenden Kupplung realisiert sein.

Die Primärseite 18 der ersten Torsionsschwingungsdämpfereinheit TD1 stellt im Wesentlichen auch den Eingangsbereich 24 der Torsionsschwingungsdämpferanordnung 16 bereit und schließt an die Überbrückungskupplung 14 an. Die Sekundärseite 20 dieser ersten Torsionsschwingungsdämpfereinheit TD1 schließt an die Primärseite 18' der zweiten Torsionsschwingungsdämpfereinheit TD2 an und bildet zusammen mit dieser eine Zwischenmassenanordnung 60. Die Sekundärseite 20' der zweiten Torsionsschwingungsdämpfereinheit TD2 schließt an eine Primärseite 18" einer dritten Torsionsschwingungsdämpfereinheit TD3 an und bildet zusammen mit dieser eine weitere Zwischenmassenanordnung 70'. Die Primärseite 18" der dritten Torsionsschwingungsdämpfereinheit TD3 ist über eine Dämpferfederanordnung 22" mit einer Sekundärseite 20" der dritten Torsionsschwingungsdämpfereinheit TD3 in Drehmomentübertragungskopplung. Diese Sekundärseite 20" stellt im Wesentlichen den Ausgangsbereich 26 der Torsionsschwingungsdämpferanordnung 16 bereit und ist an die Getriebeeingangswelle GEW angekoppelt.

Man erkennt bei der in Fig. 19 dargestellten Variante, dass das Turbinenrad T an die Zwischenmassenanordnung 70' zwischen den beiden Torsionsschwingungsdämpfereinheiten TD2 und TD3 angekoppelt ist. Auch die Tilgeranordnung 28 ist entweder direkt oder über das Turbinenrad T an diese Zwischenmassenanordnung 70' angekoppelt.

Diese Ausgestaltung ist von besonderem Vorteil, da aufgrund der Anbindung der Tilgeranordnung 28 zwischen die zweite und die dritte Torsionsschwingungsdämpfereinheit TD2 und TD3 ein hervorragendes Tilgungspotential bereitstellt und auch weiterhin den Turbinenrad T bzw. auch der Tilgeranordnung 28 zwei Torsionsschwingungsdämpfereinheiten TD1 und TD2 vorgeschaltet sind.

Bei der in Fig. 20 gezeigten Variante mit drei Torsionsschwingungsdämpfereinheiten TD1, TD2 und TD3 ist bei zwischen die beiden Torsionsschwingungsdämpfereinheiten TD2 und TD3 angekoppeltem Turbinenrad T die Tilgeranordnung 28 an den Eingangsbereich 24 der Torsionsschwingungsdämpferanordnung 16 und somit die Primärseite 18 der ersten Torsionsschwingungsdämpfereinheit TD1 angekoppelt, also unmittelbar auf die Überbrückungskupplung 14 folgend.

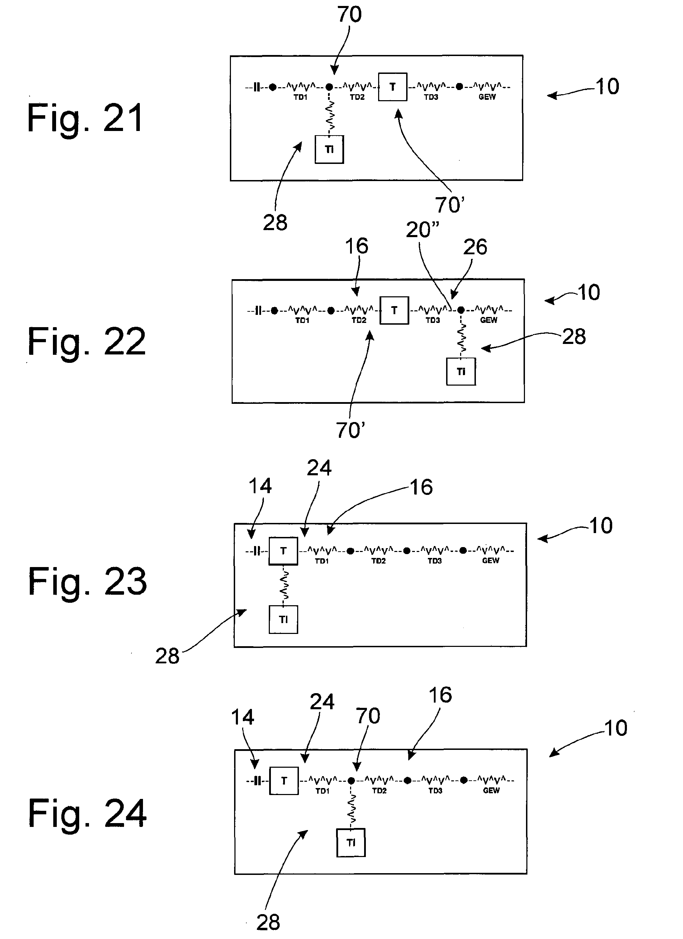

Die Fig. 21 zeigt eine Variante, bei welcher die Tilgeranordnung 28 an die Zwischenmassenanordnung 70 zwischen den beiden Torsionsschwingungsdämpfereinheit TD1 und TD2 angekoppelt ist, während das Turbinenrad T an die Zwischenmassenanordnung 70' zwischen den beiden Torsionsschwingungsdämpfereinheit TD2 und TD3 angekoppelt ist.

Bei der in Fig. 22 dargestellten Anordnung ist das Turbinenrad T zwischen die beiden Torsionsschwingungsdämpfereinheit TD2 und TD3, also an die Zwischenmassenanordnung 70' gekoppelt. Die Tilgeranordnung 28 ist an den Ausgangsbereich 26 der Torsionsschwingungsdämpferanordnung 16, mithin also die Sekundärseite 20" der dritten Torsionsschwingungsdämpfereinheit TD3 angekoppelt und liegt somit wirkungsmäßig unmittelbar vor der Ankopplung an die Getriebeeingangswelle GEW.

In Fig. 23 ist eine Variante gezeigt, bei welcher das Turbinenrad T im Drehmomentenfluss - bezogen auf den Zugzustand - nach der Überbrückungskupplung 14 und vor der ersten Torsionsschwingungsdämpfereinheit TD1 der Torsionsschwingungsdämpferanordnung 16 liegt, mithin also an den Eingangsbereich 24 desselben angekoppelt ist. Die Tilgeranordnung 28 ist gleichermaßen an diesen Eingangsbereich 24 entweder direkt oder über das Turbinenrad T angekoppelt.

Bei der in Fig. 24 gezeigten Ausgestaltungsvariante ist die Tilgeranordnung 28 an die Zwischenmassenanordnung 70 zwischen den beiden Torsionsschwingungsdämpfereinheiten TD1 und TD2 angekoppelt. Das Turbinenrad ist an den Eingangsbereich 24 der Torsionsschwingungsdämpferanordnung 16 angekoppelt.

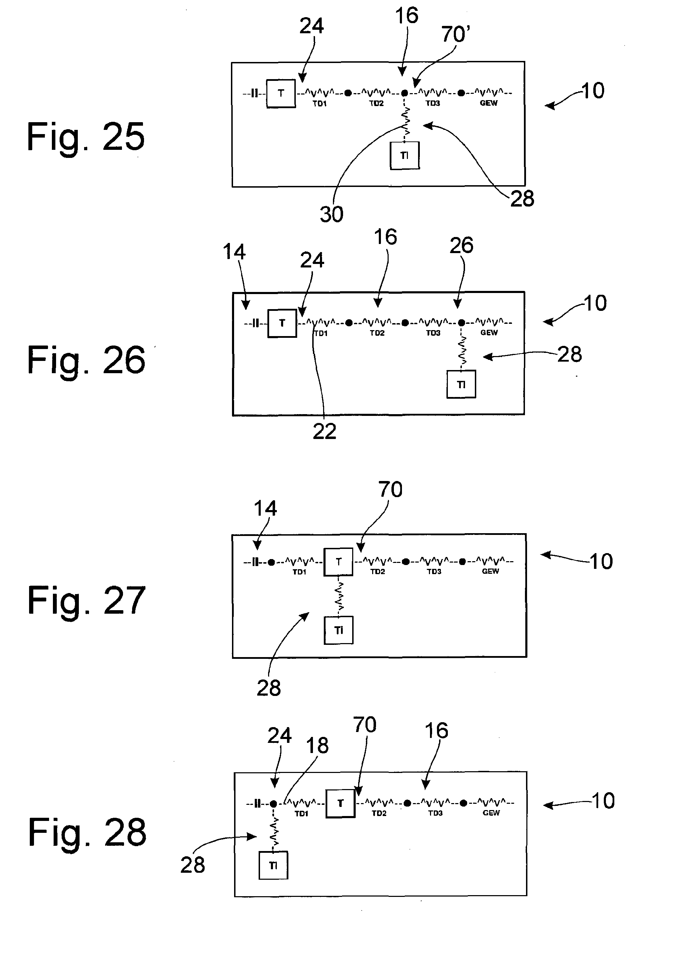

Die Fig. 25 zeigt eine Variante, bei welcher das Turbinenrad T an den Eingangsbereich 24 der Torsionsschwingungsdämpferanordnung 16 angekoppelt ist, während die Tilgeranordnung 28 über deren Tilgerelastizität 30 an die Zwischenmassenanordnung 70' zwischen der zweiten Torsionsschwingungsdämpfereinheit und der dritten Torsionsschwingungsdämpfereinheit TD3 angekoppelt ist.

In Fig. 26 ist die Tilgeranordnung 28 an den Ausgangsbereich 26 der Torsionsschwingungsdämpferanordnung 16 angekoppelt, während das Turbinenrad T an den Eingangsbereich 24, also zwischen der Überbrückungskupplung 14 und der ersten Torsionsschwingungsdämpfereinheit TD1 bzw. der Dämpferfederanordnung 22 derselben angekoppelt ist. Auch hier besteht aufgrund der drei der Tilgeranordnung 28 vorgeschalteten Torsionsschwingungsdämpferanordnungen TD1, TD2 und TD3 ein sehr gutes Tilgungspotential.

In Fig. 27 ist das Turbinenrad T an die Zwischenmassenanordnung 70 zwischen der ersten Torsionsschwingungsdämpfereinheit TD1 und der zweiten Torsionsschwingungsdämpfereinheit TD2 angekoppelt und trägt mithin zu der Masseerhöhung bei. Die Tilgeranordnung 28 ist zusammen mit dem oder über das Turbinenrad T an dieselbe Zwischenmassenanordnung 70 angekoppelt.

Bei der in Fig. 28 gezeigten Variante ist die Tilgeranordnung 28 an den Eingangsbereich 24 der Torsionsschwingungsdämpferanordnung 16 bzw. die Primärseite 18 der ersten Torsionsschwingungsdämpfereinheit TD1 angekoppelt. Das Turbinenrad T ist an die Zwischenmassenanordnung 70 zwischen der ersten Torsionsschwingungsdämpfereinheit TD1 und der zweiten Torsionsschwingungsdämpfereinheit TD2 angekoppelt.

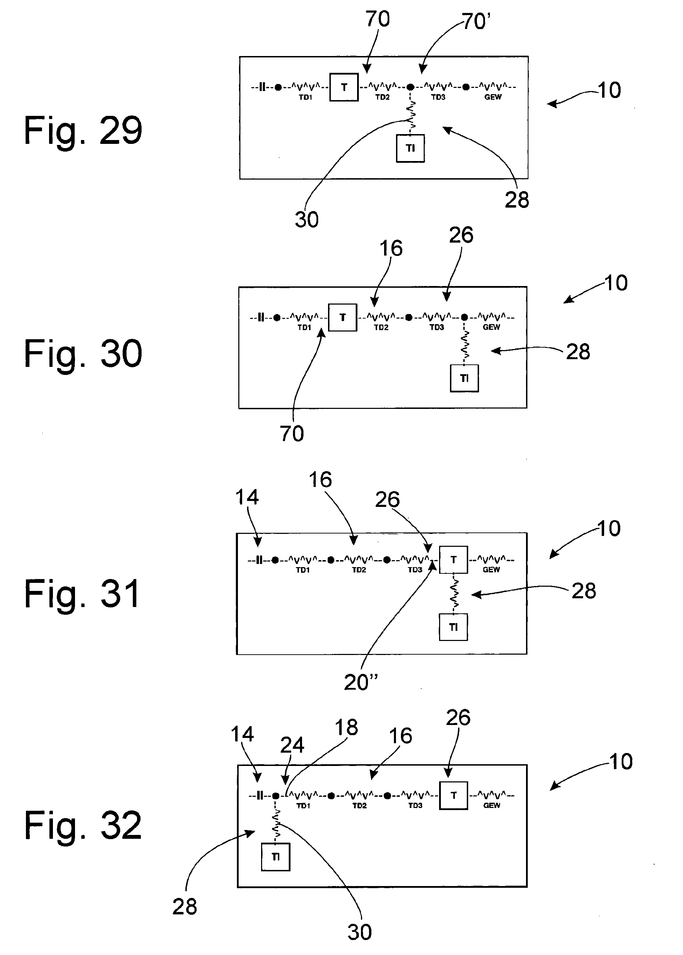

In Fig. 29 ist die Tilgeranordnung 28 an die Zwischenmassenanordnung 70 zwischen der zweiten Torsionsschwingungsdämpfereinheit TD2 und der dritten Torsionsschwingungsdämpfereinheit TD3 angekoppelt, während das Turbinenrad T an die Zwischenmassenanordnung 70 zwischen der ersten Torsionsschwingungsdämpfereinheit TD1 und der zweiten Torsionsschwingungsdämpfereinheit TD2 angebunden ist. Auch hier ist also an die Zwischenmassenanordnung 70, an welche das Turbinenrad T angekoppelt ist, keine Tilgeranordnung angekoppelt.

Die Fig. 30 zeigt eine Variante, bei welcher die Tilgeranordnung 28 unmittelbar vor die Anbindung an die Getriebeeingangswelle GEW angekoppelt ist, also an den Ausgangsbereich 26 der Torsionsschwingungsdämpferanordnung 16. Das Turbinenrad T ist an die Zwischenmassenanordnung 70 zwischen der ersten Torsionsschwingungsdämpfereinheit TD1 und der zweiten Torsionsschwingungsdämpfereinheit TD2 angekoppelt.

Die Fig. 31 zeigt ein Ausgestaltungsbeispiel, bei welchem das Turbinenrad T und mit diesem die Tilgeranordnung 28 an den Ausgangsbereich 26 der Torsionsschwingungsdämpferanordnung 16, also die Sekundärseite 20" der dritten Torsionsschwingungsdämpfereinheit TD3 angekoppelt ist.

In Fig. 32 ist eine Variante gezeigt, bei welcher die Tilgeranordnung 28 mit ihrer Tilgerelastizität 30 an den Eingangsbereich 24 der Torsionsschwingungsdämpferanordnung 16, also die Primärseite 18 der ersten Torsionsschwingungsdämpfereinheit TD1 und mithin unmittelbar folgend auf die Überbrückungskupplung 14 angekoppelt ist. Das Turbinenrad T ist an den Ausgangsbereich 26 für einen Bereich unmittelbar vor der Anbindung an die Getriebeeingangswelle GEW angekoppelt.

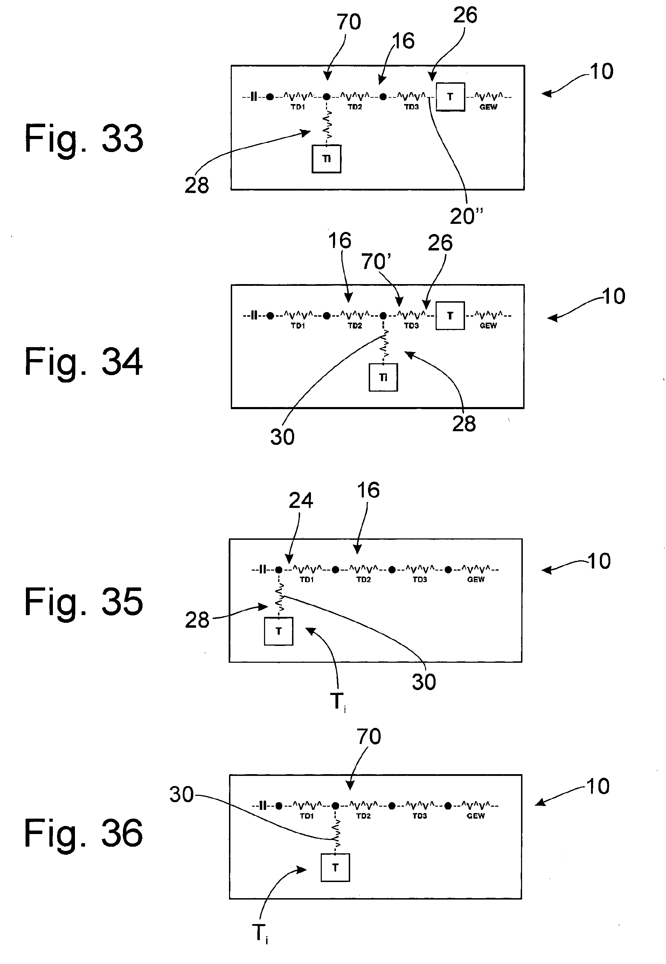

Bei der in Fig. 33 gezeigten Ausgestaltungsvariante ist die Tilgeranordnung 28 an die Zwischenmassenanordnung 70 zwischen den beiden Torsionsschwingungsdämpfereinheiten TD1 und TD2 angebunden. Das Turbinenrad T ist an den Ausgangsbereich 26 der Torsionsschwingungsdämpferanordnung 16 und mithin die Sekundärseite 20" der dritten Torsionsschwingungsdämpfereinheit TD3 angekoppelt.

Bei der in Fig. 34 dargestellten Variante erfolgt die Ankopplung der Tilgeranordnung 28 mit ihrer Tilgerelastizität 30 und der Tilgermassenanordnung Ti an die Zwischenmassenanordnung 70' zwischen der zweiten Torsionsschwingungsdämpfereinheit TD2 und der dritten Torsionsschwingungsdämpfereinheit TD3, während das Turbinenrad T an den Ausgangsbereich 26 der Torsionsschwingungsdämpferanordnung 16 angekoppelt ist.

Die Fig. 35 bis 38 zeigen Ausgestaltungsvarianten einer Drehmomentübertragungsbaugruppe 10, beispielsweise in Form eines hydrodynamischen Drehmomentwandlers, einer Fluidkupplung oder einer nasslaufenden Kupplung, bei welcher das Turbinenrad T, ähnlich wie beispielsweise in Fig. 54 gezeigt, den wesentlichen Bestandteil der Tilgermassenanordnung Ti bereitstellt. Dies bedeutet, dass keine zur Masseerhöhung der Tilgermassenanordnung Ti wesentlich beitragenden zusätzlichen Masseteile vorhanden sind. Dabei ist erkennbar, dass je nach Ausgestaltung die Ankopplung der so ausgebildeten Tilgeranordnung 28 an den Eingangsbereich 24 der Torsionsschwingungsdämpferanordnung 16, die Zwischenmassenanordnung 70 zwischen der ersten Torsionsschwingungsdämpfereinheit TD1 und der zweiten Torsionsschwingungsdämpfereinheit TD2, die Zwischenmassenanordnung 70' zwischen der zweiten Torsionsschwingungsdämpfereinheit TD2 und der dritten Torsionsschwingungsdämpfereinheit TD3 oder den Ausgangsbereich 26 der Torsionsschwingungsdämpferanordnung 26, also unmittelbar vor der Getriebeeingangswelle GEW, erfolgen kann.

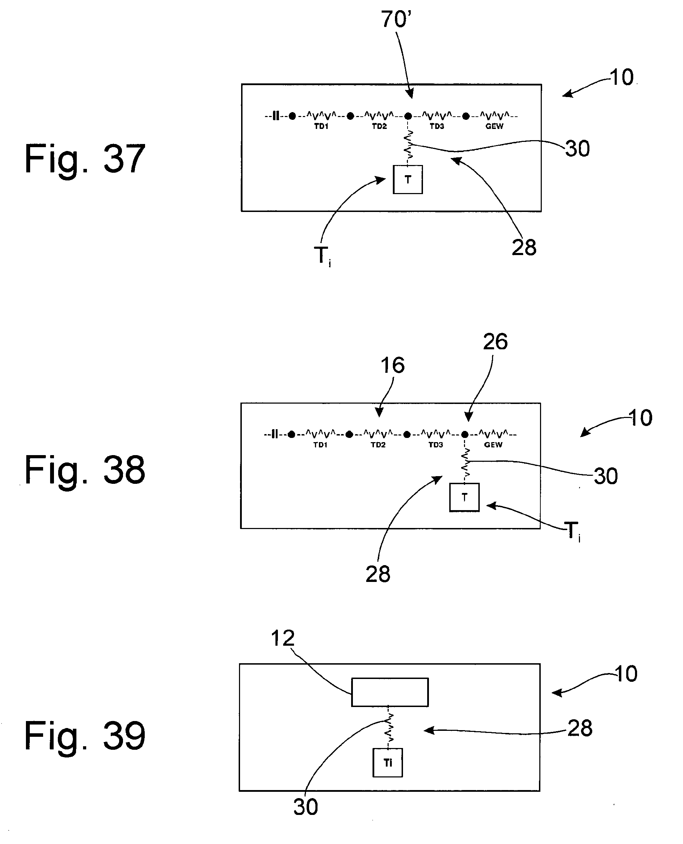

Ein weiteres Aufbauprinzip ist in Fig. 39 dargestellt. Man erkennt die beispielsweise in Form einer Fluidkupplung, eines hydrodynamischen Drehmomentwandlers oder nasslaufenden Kupplung aufgebaute Drehmomentübertragungsbaugruppe mit ihrem Gehäuse 12. In diesem Gehäuse 12 sind die verschiedenen vorangend erläuterten Baugruppen, wie z. B. eine Überbrückungskupplung und die Torsionsschwingungsdämpferanordnung vorgesehen. Es ist dabei darauf hinzuweisen, dass hier selbstverständlich die Torsionsschwingungsdämpferanordnung mit einer, zwei oder noch mehr Torsionsschwingungsdämpfereinheiten und/oder einem Festfrequenztilger wie vorangehend beschrieben, ausgebildet sein kann. Die Tilgeranordnung 28 ist außerhalb des Gehäuses 12 angeordnet und über ihre Tilgerelastizität 30 an dieses angebunden. Ein wesentlicher Vorteil dieser Variante ist, dass dadurch kein zusätzlicher Bauraum im Inneren des Gehäuses 12 beansprucht wird und insbesondere die Tilgerelastizität 30 nicht der vergleichsweise aggressiven Umgebung, welche durch ein Fluid, wie z. B. Öl mit hoher Temperatur erzeugt wird, ausgesetzt ist. Bei dieser Anordnung ist weiterhin die Ausgestaltung bzw. auf die Ankopplung der Tilgeranordnung 28 völlig unabhängig von dem im Inneren des Gehäuses 12 vorgesehenen Baugruppen. Insbesondere ist es dabei nicht zwingend erforderlich, dass im Gehäuse 12, also beispielsweise im Drehmomentübertragungsweg zwischen einer Überbrückungskupplung und einer Abtriebsnabe oder einem Turbinenrad und der Überbrückungskupplung bzw. der Abtriebsnabe eine Torsionsschwingungsdämpferanordnung vorgesehen ist.

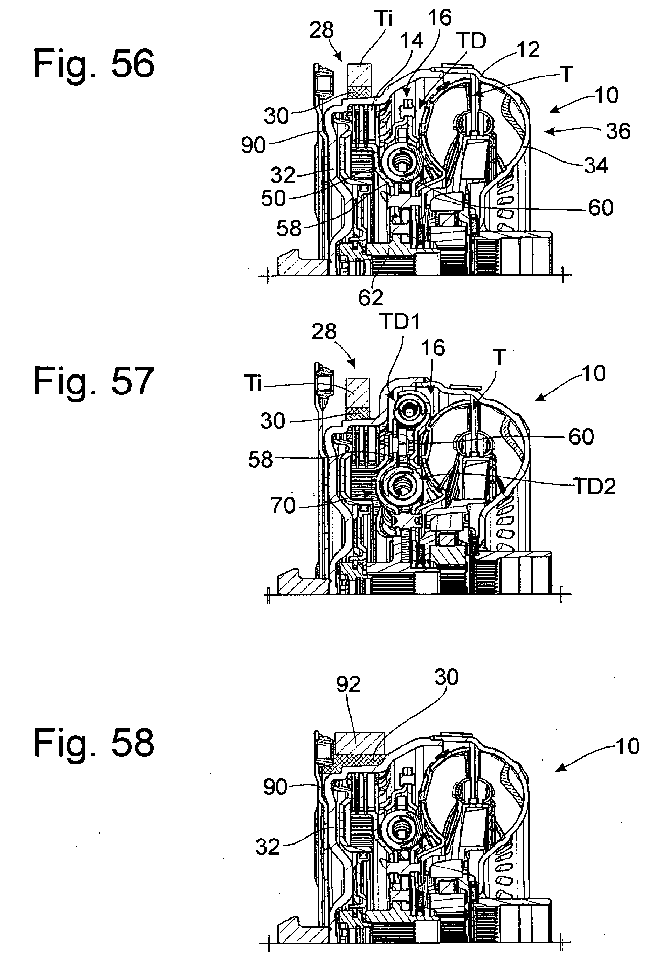

Eine konstruktive Ausgestaltung einer derartigen Drehmomentübertragungsbaugruppe 10 in Form eines hydrodynamischen Drehmomentwandlers ist in Fig. 56 gezeigt. Man erkennt im Gehäuse 12 der Überbrückungskupplung 14, die über den Innenlamellenträger 50 an die Überbrückungskupplung 14 angekoppelte Torsionsschwingungsdämpfereinheit TD der Torsionsschwingungsdämpferanordnung 16, deren Eingangsbereich, hier bereitgestellt durch zwei Deckscheibenelemente 58, 60 auch das Turbinenrad T trägt. Hier ist also eine Torsionsschwingungsdämpferanordnung 16 gezeigt, die im Drehmomentübertragungsweg sowohl zwischen der Überbrückungskupplung 14 als auch des Turbinenrads T und der Abtriebsnabe 62 wirksam ist.

Die Tilgeranordnung 28 umfasst eine ringartig oder mit Ringsegmenten ausgebildete Tilgermassenanordnung Ti, die an einem Außenumfangsbereich der antriebsseitigen Gehäuseschale 32 des Gehäuses 12 über die Tilgerelastizität 30 an das Gehäuse 12 angebunden ist. Die Tilgerelastizität ist hier vorzugsweise als ringartig ausgebildetels Elastomerelement bereitgestellt, das in seinem Außenumfangsbereich mit der Tilgermassenanordnung Ti materialschlüssig, beispielsweise durch Verklebung oder Vulkanisierung, fest verbunden ist und mit dem Außenumfang der Gehäuseschale 32 beispielsweise durch eine daran eingeformte Verzahnung in Drehkopplungseingriff steht. Insbesondere kann diese Verzahnung auch dazu dienen, die mit dem Gehäuse 12 drehfesten Reibelemente der Überbrückungskupplung 14 an diese anzukoppeln, so dass die durch Umformen der Gehäuseschale 32 gebildete Verzahnung sowohl an der Innenseite, als auch an der Außenseite der Gehäuseschale 32 genutzt werden kann.

Durch die Verformbarkeit der Tilgerelastizität 30 kann die Tilgermassenanordung Ti sich in Umfangsrichtung bezüglich des Gehäuses 12 oszillierend bewegen, wenn Schwingungsanregungen auftreten.

Ein besonderer Vorteil dieser Ausgestaltung liegt darin, dass das als Tilgerelastizität 30 eingesetzte Elastomermaterial, wie z. B. Gummi oder gummiartiges Material, eine von der Temperatur im Inneren des Gehäuses 12 im Wesentlichen unabhängige Steifigkeit aufweist. Auch weist es eine derartige Stabilität auf, dass es durch den vorangehend beschriebenen verzahnungsartigen Eingriff stabil und über die Betriebslebensdauer hinweg haltend mit dem Gehäuse 12 gekoppelt werden kann. Alternativ oder zusätzlich ist auch am radial inneren Bereich der Tilgerelastizität 30 eine materialschlüssige Anbindung z. B. durch Verkleben oder Vulkanisieren möglich.

Die Fig. 57 zeigt eine Variante, welche grundsätzlich der vorangehenden mit Bezug auf die Fig. 56 Beschriebenen entspricht. Man erkennt, dass bei dieser Variante die Torsionsschwingungsdämpferanordnung 16 mit den beiden radial gestaffelt liegenden Torsionsschwingungsdämpfereinheit TD1 und TD2 ausgebildet ist, deren Aufbau bzw. Integration in eine Drehmomentübertragungsbaugruppe, wie z. B. einen hydrodynamischen Drehmomentwandler, vorangehend ausführlich erläutert wurde. Das Turbinenrad T ist hier an die durch die beiden Deckscheibenelemente 58, 60 bereitgestellte Zwischenmassenanordnung 70 angebunden.

Die Fig. 58 zeigt eine Abwandlung der in Fig. 56 gezeigten Variante. Hier ist alternativ oder zusätzlich zur Drehankopplung der Tilgeranordnung 28 durch Verzahnungseingriff der Tilgerelastizität 30 mit der Gehäuseschale 32 das Einklemmen der Tilgerelastizität 30 axial zwischen beispielsweise einem stufenartigen Absatz der Gehäuseschale 32 und einem der Anbindung an eine Antriebswelle dienenden und an die Gehäuseschale 32 angebundenen Scheibenelement 90 erkennbar. An diesem Scheibenelement 90 vorgesehene Muttern 92 können gleichzeitig auch zur Radialfixierung die Tilgerelastizität 30 von außen her übergreifen.

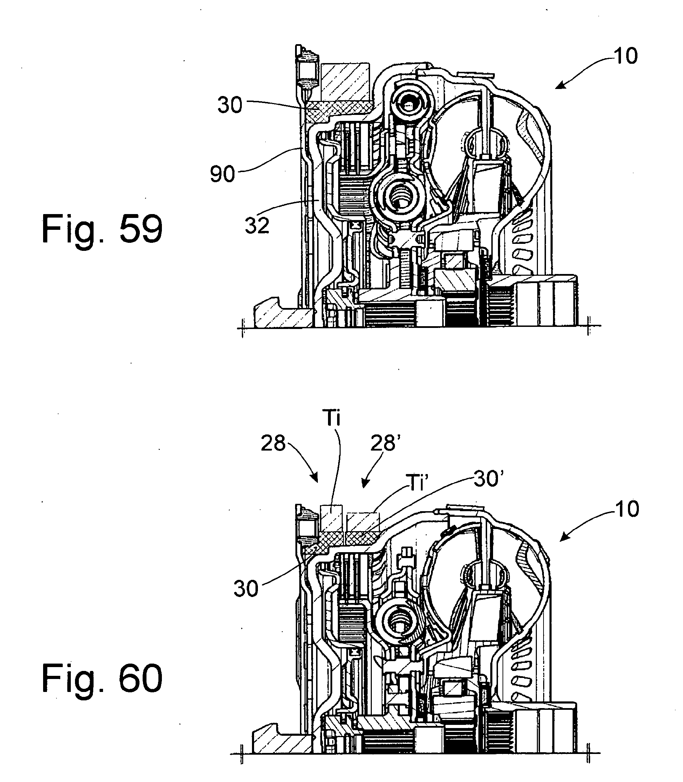

Die Fig. 59 zeigt eine entsprechende Abwandlung der in Fig. 57 dargestellten Variante. Auch hier ist die Tilgerelastizität 30 alternativ oder zusätzlich zur verzahnungsartigen Anbindung oder/und zur materialschlüssigen Anbindung durch Verkleben oder Vulkanisieren axial zwischen der Gehäuseschale 32 und dem Scheibenelement 90 geklemmt.

Die Fig. 60 zeigt eine Kombination der beiden vorangehend mit Bezug auf die Fig. 56 und 58 dargestellten Varianten der Anbindung bzw. Ausgestaltung der Tilgeranordnung 28. Insbesondere sind hier zwei Tilgeranordnungen 28 und 28' vorhanden, welche beispielsweise auf unterschiedliche Eigenfrequenzen bzw. Tilgungsfrequenzen durch entsprechende Auswahl der Tilgermassenanordungen Ti und Ti' bzw. der Tilgerelastizitäten 30 und 30' abgestimmt sind. Selbstverständlich ist dieses Kombinationsprinzip auch bei einer Ausgestaltung der Torsionsschwingungsdämpferanordnung mit mehreren seriell wirksamen Torsionsschwingungsdämpfereinheiten übertragbar.

Die Ausgestaltung, wie sie vorangehend mit Bezug auf die Fig. 39 bzw. 56 bis 60 erläutert wurde, also die Positionierung einer oder mehrerer Tilgeranordnungen außerhalb des Gehäuses der Drehmomentübertragungsbaugruppe verbindet verschiedene Vorteile. So muss einerseits eine Verträglichkeit der Tilgeranordnung bzw. von Komponenten derselben mit dem in dem Gehäuse angeordneten Medium, z. B. Öl, nicht berücksichtigt werden, ebenso wie die im Inneren des Gehäuses im Allgemeinen vorhandenen vergleichsweise hohen Temperaturen, so dass auch die Wirkungscharakteristik der Tilgeranordnung weniger temperaturabhängig sein wird. Weiter nutzen diese Ausgestaltungsvarianten einen Bauraum, der im Allgemeinen für andere Komponenten nicht genutzt wird, und sie sind ohne weitere konstruktive Probleme mit anderen Varianten von Schwingungsdämpfern bzw. Tilgern kombinierbar. Insbesondere sind sie modul- bzw. baukastenartig kombinierbar sowohl mit verschiedenen anderen Dämpferprinzipien als auch mit verschiedensten Drehmomentübertragungsbaugruppen. Weiter ist es leicht möglich, Tilgeranordnungen parallel wirken zu lassen und diese auf verschiedene Eigenfrequenzen abzustimmen.

Es ist darauf hinzuweisen, dass selbstverständlich auch die vorangehend beschriebenen Ausgestaltungsformen, bei welchen die Tilgeranordnung in das Gehäuse integriert und dort beispielsweise an verschiedenste Bereiche einer Torsionsschwingungsdämpferanordnung angekoppelt ist, das Vorsehen mehrerer parallel wirkender Tilgeranordnungen, diese beispielsweise abgestimmt mit verschiedenen Eigenfrequenzen, zulässt.

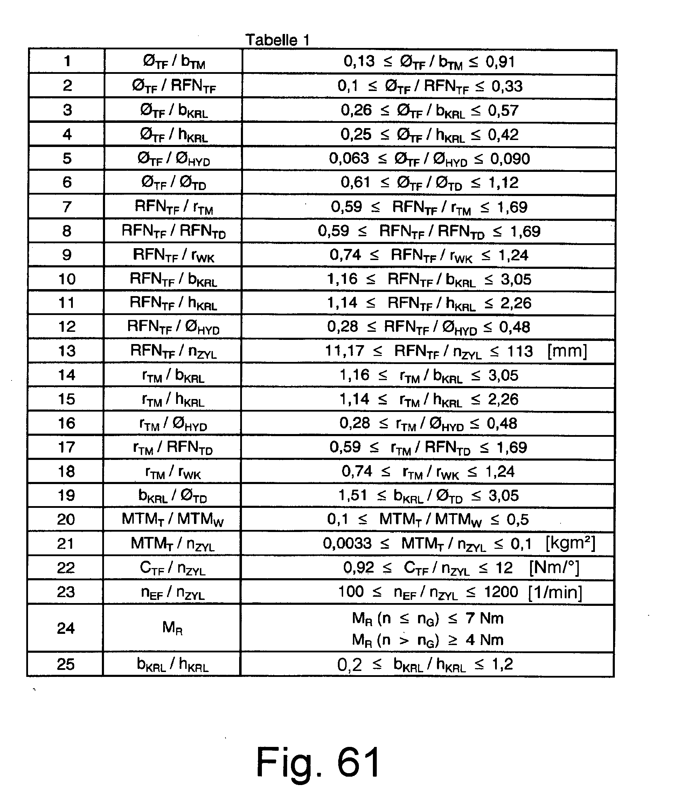

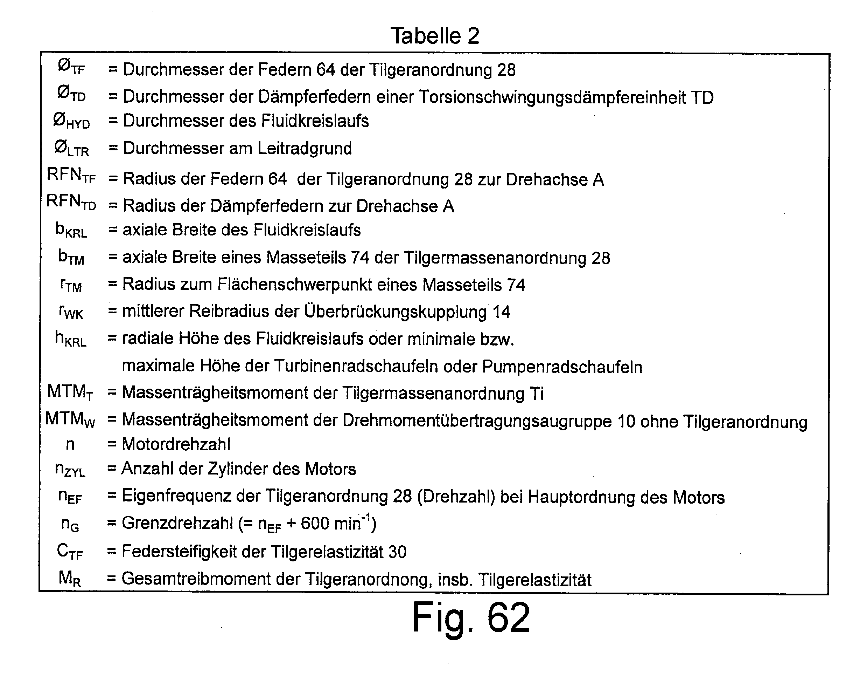

In den Fig. 61 bis 63 wird Bezug genommen auf verschiedene Maße bzw. Maßverhältnisse und Werte bzw.

Wertebereiche, welche für diese im Zusammenhang mit der vorliegenden Erfindung, insbesondere den verschiedenen vorangehend erläuterten Ausgestaltungsformen einer Drehmomentübertragungsbaugruppe, diese beispielsweise ausgebildet als hydrodynamischer Drehmomentwandler, Fluidkupplung oder nasslaufende Kupplung, vorgesehen sein können. Es ist darauf hinzuweisen, dass jeder der in den Zeilen 1 bis 25 der Tabelle 1 der Fig. 61 angegebenen Werte bzw. Wertebereiche für sich alleine ebenso wie in Kombination mit jedem beliebigen der anderen Werte bzw. Wertebereiche bei einer erfindungsgemäßen Drehmomentübertragungsbaugruppe, insbesondere bei den vorangehend beschriebenen Ausgestaltungsformen derselben, realisiert sein kann.

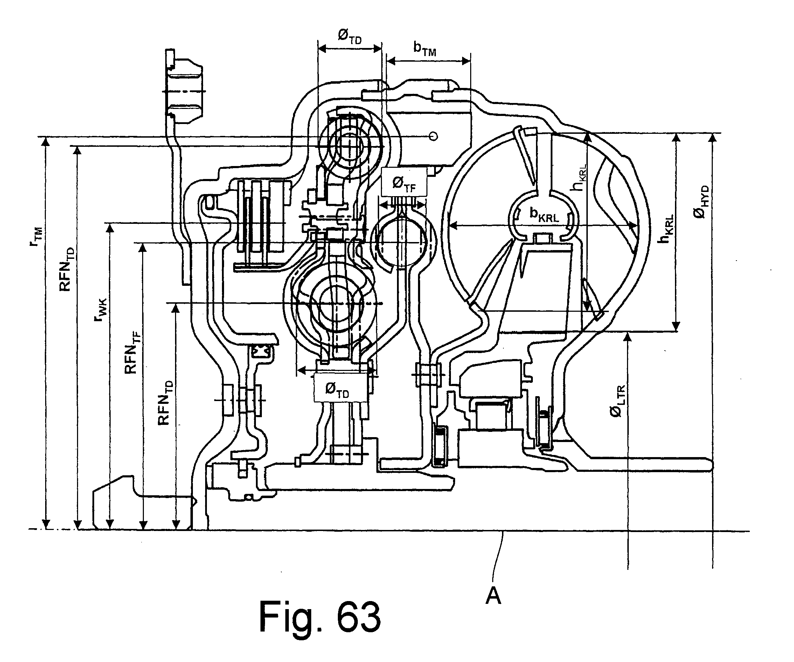

Anzumerken ist zu den in Fig. 63 auch veranschaulichten Größen, dass beispielsweise die jeweiligen Radien bzw. radialen Abstände $RFN_{TF}$ bzw. $RFN_{TD}$ den Abstand zwischen der Drehachse A der Drehmomentübertragungsbaugruppe 10 und jeweils dem radialen Mittenbereich der verschiedenen Federn der Tilgerelastizität bzw. der jeweiligen Dämpferfederanordnungen angibt. Da diese Federn im Allgemeinen sich in Umfangsrichtung um die Drehachse bzw. tangential dazu erstrecken, ist dieser Abstand also jeweils gemessen zu einer Längsmittenachse bzw. deren minimalen Abstand zur Drehachse A.

Zu dem in Zeile 6 der Tabelle 1 angegebenen Wertebereich für das Verhältnis des Durchmessers der Federn 64 der Tilgeranordnung 28 zum Durchmesser der Federn einer Dämpferfederanordnung ist anzumerken, dass dieses Verhältnis für jede von ggf. mehreren Torsionsschwingungsdämpfereinheiten TD der Torsionsschwingungsdämpferanordnung zutrifft. Beispielsweise bei dem in Fig. 63 bzw. in Fig. 44 dargestellten Ausgestaltungsbeispiel bedeutet dies, dass das angegebene Durchmesserverhältnis des Durchmessers der Federn 64 der Tilgerelastizität 30 sowohl zum Durchmesser der Federn der Dämpferanordnung 22 der radial äußeren Torsionsschwingungsdämpfereinheit TD1 als auch zum Durchmesser der Federn der Dämpferfederanordnung 22' der radial inneren zweiten Torsionsschwingungsdämpfereinheit TD2 im angegebenen Wertebereich zwischen 0,61 und 1,12 liegen kann.

Zu der beispielsweise in Zeile 23 der Tabelle 1 mit einbezogenen Eigenfrequenz $n_{EF}$ einer Tilgeranordnung 28 ist auszuführen, dass insbesondere dann, wenn sie ins Verhältnis zur Anzahl $n_{ZYL}$ der Zylinder einer Brennkraftmaschine gesetzt wird oder zum Ermitteln einer Grenzdrehzahl herangezogen wird, diese Eigenfrequenz ausgedrückt werden kann in 1/min, um ein Verhältnis zur Drehzahl der Brennkraftmaschine, welche im Allgemeinen ebenfalls in 1/min bzw. Umdrehungen/min angegeben ist, bereitstellen zu können. Hierzu kann beispielsweise angenommen werden, dass bei einer Vierzylinder-ViertaktBrennkraftmaschine pro zwei Umdrehungen vier Zündungen stattfinden. Dies bedeutet, dass pro Umdrehung zwei anregende Ereignisse auftreten mit der Folge, dass beispielsweise bei einer Eigenfrequenz der Tilgeranordnung 28 von 2000U/min eine Drehzahl der Brennkraftmaschine von 1000 U/min zu einer Anregung der Tilgeranordnung im Bereich ihrer Eigenfrequenz führen kann.

Zu dem mit $M_R$ bezeichneten Gesamttreibmoment der Tilgeranordnung 28 ist auszuführen, dass bei diesem Gesamttreibmoment primär Coulombsche Reibeffekte berücksichtigt sind, welche beispielsweise dadurch generiert werden, dass die Federn 64 der Tilgerelastizität 30 sich fliehkraftbedingt nach radial außen gegen die diese stützenden Bauteile, also beispielsweise die Kopplungselemente 72 oder/und 66 anlegen und bei Kompression sich gleitreibend entlang einem oder beiden von diesen Bauteilen bewegen. Durch die Verdrängung von Fluid im Inneren des Gehäuses 12 der Drehmomentübertragungsbaugruppe 10 hervorgerufene innere Reibeffekte sind dabei jedoch unberücksichtigt.

Die Federsteifigkeit $C_{TF}$ der Tilgerelastizität 30 nimmt Bezug auf die gesamte

Elastizität bzw. Federkonstante, welche durch die Tilgerelastizität 30 bereitgestellt wird, ggf. also die Gesamtfederkonstante einer Mehrzahl von zueinander parallel und/oder in Reihe wirkenden Federn oder Elastomerelementen.

Mit dem Radius $r_{TM}$ zum Flächenschwerpunkt eines Masseteils 74 der Tilgermassenanordnung Ti ist Bezug genommen auf eine Größe, welche in prinzipieller Weise einem Massenschwerpunkt entspricht, jedoch nicht bezogen auf das gesamte Masseteil 74, sondern nur auf eine Querschnittsfläche desselben. Hier ist zu berücksichtigen, dass das Masseteil 74 sich im Allgemeinen ringartig um die Drehachse A erstreckt, so dass der Gesamtmassenschwerpunkt eines derartigen Masseteils oder ggf. mehrerer in Umfangsrichtung aufeinander folgender Masseteile 74 auch zum Vermeiden von Unwuchten auf der Drehachse A liegen wird.

## Patentansprüche

1.  Drehmomentübertragungsbaugruppe, insbesondere hydrodynamischer Drehmomentwandler, Fluidkupplung oder nasslaufende Kupplung, umfassend eine Gehäuseanordnung (12), in der Gehäuseanordnung (12) vorzugsweise eine Torsionsschwingungsdämpferanordnung (16) mit einem mit der Gehäuseanordnung (12) gekoppelten oder koppelbaren Eingangsbereich (24) und einem mit einem Abtriebsorgan (GEW) zu koppelnden Ausgangsbereich (26), ferner umfassend wenigstens eine Tilgeranordnung (28) mit einer vermittels einer Tilgerelastizität (30) an die Drehmomentübertragungsbaugruppe (10) angekoppelten Tilgermassenanordnung (Ti),
**dadurch gekennzeichnet, dass** für das Verhältnis eines Massenträgheitsmoments ($MTM_T$) der Tilgeranordnung (28), insbesondere der Tilgermassenanordnung (Ti), zu einem Massenträgheitsmoment ($MTM_W$) der Drehmomentübertragungsbaugruppe (10) ohne Tilgeranordnung gilt:

$$0,1 \leq MTM_T / MTM_W \leq 0,5.$$

**2.** Drehmomentübertragungsbaugruppe nach Anspruch 1,
**dadurch gekennzeichnet, dass** die Tilgerelastizität (30) eine Elastomermaterialanordnung umfasst.

**3.** Drehmomentübertragungsbaugruppe nach Anspruch 1 oder 2,
**dadurch gekennzeichnet, dass** die Tilgerelastizität (30) eine Federanordnung, vorzugsweise Schraubenfederanordnung, umfasst.

**4.** Drehmomentübertragungsbaugruppe nach einem der Ansprüche 1 bis 3,
**dadurch gekennzeichnet, dass** wenigstens eine Tilgeranordnung (28) an die Gehäuseanordnung (12) angekoppelt ist.

**5.** Drehmomentübertragungsbaugruppe nach einem der Ansprüche 1 bis 4, **dadurch gekennzeichnet, dass** wenigstens eine Tilgeranordnung (28) an die Torsionsschwingungsdämpferanordnung (16) angekoppelt ist.

**6.** Drehmomentübertragungsbaugruppe nach Anspruch 5,
**dadurch gekennzeichnet, dass** wenigstens eine Tilgeranordnung (28) an den Eingangsbereich (34) der Torsionsschwingungsdämpferanordnung (16) angekoppelt ist.

**7.** Drehmomentübertragungsbaugruppe nach Anspruch 5 oder 6,
**dadurch gekennzeichnet, dass** wenigstens eine Tilgeranordnung (28) an den Ausgangsbereich der Torsionsschwingungsdämpferanordnung (16) angekoppelt ist.

**8.** Drehmomentübertragungsbaugruppe nach einem der Ansprüche 1 bis 7,
**dadurch gekennzeichnet, dass** die Torsionsschwingungsdämpferanordnung (16) eine Torsionsschwingungsdämpfereinheit (TD) mit einer Primärseite (18) und einer gegen die Wirkung einer Dämpferfederanordnung (22) um eine Drehachse (A) bezüglich der Primärseite (18) drehbaren Sekundärseite (20) umfasst, wobei der Eingangsbereich (24) der Torsionsschwingungsdämpferanordnung (16) die Primärseite (18) umfasst und der Ausgangsbereich (26) der Torsionsschwingungsdämpferanordnung (16) die Sekundärseite (20) umfasst.

**9.** Drehmomentübertragungsbaugruppe nach einem der Ansprüche 1 bis 7,
**dadurch gekennzeichnet, dass** die Torsionsschwingungsdämpferanordnung (16) eine Mehrzahl von in Serie wirksamen Torsionsschwingungsdämpfereinheiten (TD1, TD2, TD3) umfasst, wobei jede Torsionsschwingungsdämpfereinheit (TD1, TD2, TD3) eine Primärseite (18, 18', 18") und eine gegen die Wirkung einer Dämpferfederanordnung (22, 22', 22") um eine Drehachse (A) bezüglich der Primärseite (18, 18', 18") drehbare Sekundärseite (20, 20', 20") umfasst, wobei der Eingangsbereich (24) der Torsionsschwingungsdämpferanordnung (16) die Primärseite (18) einer ersten der Torsionsschwingungsdämpfereinheiten (TD1) umfasst, die Ausgangsseite (26) der Torsionsschwingungsdämpferanordnung (16) die Sekundärseite (20'; 20") einer letzten der Torsionsschwingungsdämpfereinheiten (TD2; TD3) umfasst und die Sekundärseite (20, 20') einer vorangehenden und die Primärseite (18', 18") einer nachfolgenden zweier aufeinander folgend angeordneten Torsionsschwingungsdämpfereinheiten (TD1, TD2, TD3) wenigstens einen Teil einer Zwischenmassenanordnung (70, 70') bereitstellen.

**10.** Drehmomentübertragungsbaugruppe nach Anspruch 9 und einem der Ansprüche 5 bis 7,
**dadurch gekennzeichnet, dass** wenigstens eine Tilgeranordnung (28) an eine Zwischenmassenanordnung (70, 70') angekoppelt ist.

**11.** Drehmomentübertragungsbaugruppe nach einem der Ansprüche 1 bis 10,
gekennzeichnet durch ein Pumpenrad (36) und ein in der Gehäuseanordnung (12) angeordnetes Turbinenrad (T).

**12.** Drehmomentübertragungsbaugruppe nach Anspruch 11,
**dadurch gekennzeichnet, dass** das Turbinenrad (T) wenigstens einen Teil der Tilgermassenanordnung (Ti) bereitstellt.

**13.** Drehmomentübertragungsbaugruppe nach Anspruch 11 oder 12,

**dadurch gekennzeichnet, dass** das Turbinenrad (T) an den Eingangsbereich (24) oder den Ausgangsbereich (26) der Torsionsschwingungsdämpferanordnung (16) angekoppelt ist.

14. Drehmomentübertragungsbaugruppe nach Anspruch 9 oder 10 und Anspruch 11 oder 12,
   **dadurch gekennzeichnet, dass** das Turbinenrad (T) an eine Zwischenmassenanordnung (70, 70') angekoppelt ist.

15. Drehmomentübertragungsbaugruppe nach Anspruch 14,
   **dadurch gekennzeichnet, dass** das Turbinenrad (T) und wenigstens eine Tilgeranordnung (28) an die selbe Zwischenmassenanordnung (70, 70') angekoppelt sind.

16. Drehmomentübertragungsbaugruppe nach einem der Ansprüche 11 bis 15,
   **dadurch gekennzeichnet, dass** wenigstens eine Tilgeranordnung (28) an das Turbinenrad (T) angekoppelt ist.

17. Drehmomentübertragungsbaugruppe nach Anspruch 14,
   **dadurch gekennzeichnet, dass** an die Zwischenmassenanordnung (70, 70'), an welche das Turbinenrad (T) angekoppelt ist, keine Tilgeranordnung (28) angekoppelt ist.

18. Drehmomentübertragungsbaugruppe nach einem der Ansprüche 1 bis 17,
   **dadurch gekennzeichnet, dass** für ein Reibmoment ($M_R$) der Tilgeranordnung (28), insbesondere der Tilgerelastizität (30), gilt:

$$M_R\,(n \leq n_G) \leq 7\ \text{Nm}$$

$$M_R\,(n > n_G) \geq 4\ \text{Nm,}$$

wobei n die Drehzahl der Drehmomentübertragungsbaugruppe (10) um die Drehachse (A) ist und $n_G$ eine mit vorbestimmtem Drehzahlabstand über einer der Eigenfrequenz der Tilgeranordnung (28) entsprechenden Drehzahl liegende Grenzdrehzahl ist.

19. Drehmomentübertragungsbaugruppe nach einem der Ansprüche 1 bis 18 in Verbindung mit Anspruch 11,
   **dadurch gekennzeichnet, dass** für ein Verhältnis einer axialen Breite ($b_{KRL}$) eines mit dem Turbinenrad (T) und dem Pumpenrad (36) gebildeten Fluidkreislaufs zur radialen Höhe ($h_{KRL}$) des Fluidkreislaufs gilt:

$$0{,}2 \leq b_{KRL}\,/\,h_{KRL} \leq 1{,}2.$$

20. Drehmomentübertragungsbaugruppe nach einem der Ansprüche 1 bis 19,
   **dadurch gekennzeichnet, dass** für ein Verhältnis eines Durchmessers ($\varnothing_{TF}$) von Federn (54) der Tilgerelastizität (30) zu deren radialen Abstand ($RFN_{TF}$) bezüglich der Drehachse (A) gilt:

$$0{,}1\ \varnothing_{TF}\,/\,RFN_{TF} \leq 0{,}33.$$

21. Drehmomentübertragungsbaugruppe nach einem der Ansprüche 1 bis 20,
   **dadurch gekennzeichnet, dass** für ein Verhältnis eines radialen Abstands ($RFN_{TF}$) von Federn (54) der Tilgeranordnung (28) bezüglich der Drehachse (A) zum radialen Abstand ($r_{TM}$) eines Flächenschwerpunkts eines Masseteils (74) der Tilgermassenanordnung (Ti) bezüglich der Drehachse (A) gilt:

$$0{,}59 \leq RFN_{TF} / r_{TM} \leq 1{,}69.$$

**22.** Antriebssystem, umfassend eine Mehrzylinderbrennkraftmaschine und eine mit einer Kurbelwelle der Mehrzylinderbrennkraftmaschine gekoppelte Drehmomentübertragungsbaugruppe (10) nach einem der vorhergehenden Ansprüche.

**23.** Antriebssystem nach Anspruch 22,
**dadurch gekennzeichnet, dass** für das Verhältnis eines Massenträgheitsmoments ($MTM_T$) der Tilgeranordnung (28), insbesondere der Tilgermassenanordnung (Ti), zur Anzahl ($n_{ZYL}$) der Zylinder der Mehrzylinderbrennkraftmaschine gilt:

$$0{,}0033 \ kgm^2 \leq MTM_T / n_{ZYL} \leq 0{,}1 \ kgm^2.$$

**24.** Antriebssystem nach Anspruch 22 oder 23,
**dadurch gekennzeichnet, dass** für ein Verhältnis einer Steifigkeit ($C_{TF}$) der Tilgerelastizität (30) zur Anzahl ($n_{ZYL}$) der Zylinder der Mehrzylinderbrennkraftmaschine gilt:

$$0{,}92 \ Nm/° \leq C_{TF} / n_{ZYL} \leq 12 \ Nm/°.$$

**25.** Antriebssystem nach einem der Ansprüche 22 bis 24,
**dadurch gekennzeichnet, dass** für ein Verhältnis der einer Eigenfrequenz der Tilgeranordnung (28) entsprechenden Drehzahl der Mehrzylinderbrennkraftmaschine zur Anzahl ($n_{ZYL}$) der Zylinder der Mehrzylinderbrennkraftmaschine gilt:

$$100/min \leq n_{EF} / n_{ZYL} \leq 1200/min.$$

**Claims**

**1.** Torque transmission assembly, in particular hydrodynamic torque converter, fluid coupling or wet-running clutch, comprising a housing arrangement (12), in the housing arrangement (12) preferably a torsional vibration damper arrangement (16) with an input region (24) coupled or couplable to the housing arrangement (12) and with an output region (26) to be coupled to a driven member (GEW), furthermore comprising at least one absorber arrangement (28) with an absorption mass arrangement (Ti) coupled by means of an absorber elasticity (30) to the torque transmission assembly (10), **characterized in that**, for the ratio of a mass moment of inertia ($MTM_T$) of the absorber arrangement (28), in particular of the absorption mass arrangement (Ti), to a mass moment of inertia ($MTM_W$) of the torque transmission assembly (10) without absorber arrangement, the following applies

$$0.1 \ \leq \ MTM_T/MTM_W \ \leq \ 0.5$$

**2.** Torque transmission assembly according to Claim 1, **characterized in that** the absorber elasticity (30) comprises an elastomeric material arrangement.

**3.** Torque transmission assembly according to Claim 1 or 2, **characterized in that** the absorber elasticity (30) comprises a spring arrangement, preferably helical spring arrangement.

**4.** Torque transmission assembly according to one of Claims 1 to 3, **characterized in that** at least one absorber arrangement (28) is coupled to the housing arrangement (12).

**5.** Torque transmission assembly according to one of Claims 1 to 4, **characterized in that** at least one absorber arrangement (28) is coupled to the torsional vibration damper arrangement (16).

**6.** Torque transmission assembly according to Claim 5, **characterized in that** at least one absorber arrangement (28) is coupled to the input region (34) of the torsional vibration damper arrangement (16).

**7.** Torque transmission assembly according to Claim 5 or 6, **characterized in that** at least one absorber arrangement (28) is coupled to the output region of the torsional vibration damper arrangement (16).

**8.** Torque transmission assembly according to one of Claims 1 to 7, **characterized in that** the torsional vibration damper arrangement (16) comprises a torsional vibration damper unit (TD) with a primary side (18) and with a secondary side (20) rotatable with respect to the primary side (18) about an axis of rotation (A) counter to the action of a damper spring arrangement (22), the input region (24) of the torsional vibration damper arrangement (16) comprising the primary side (18), and the output region (26) of the torsional vibration damper arrangement (16) comprising the secondary side (20).

**9.** Torque transmission assembly according to one of Claims 1 to 7, **characterized in that** the torsional vibration damper arrangement (16) comprises a plurality of torsional vibration damper units (TD1, TD2, TD3) active in series, each torsional vibration damper unit (TD1, TD2, TD3) comprising a primary side (18, 18', 18") and a secondary side (20, 20', 20") rotatable with respect to the primary side (18, 18', 18") about an axis of rotation (A) counter to the action of a damper spring arrangement (22, 22', 22"), the input region (24) of the torsional vibration damper arrangement (16) comprising the primary side (18) of a first of the torsional vibration damper units (TD1), the output side (26) of the torsional vibration damper arrangement (16) comprising the secondary side (20'; 20") of a last of the torsional vibration damper units (TD2; TD3), and the secondary side (20, 20') of a preceding and the primary side (18', 18") of a following of two successively arranged torsional vibration damper units (TD1, TD2, TD3) providing at least part of an intermediate mass arrangement (70, 70').

**10.** Torque transmission assembly according to Claim 9 and one of Claims 5 to 7, **characterized in that** at least one absorber arrangement (28) is coupled to an intermediate mass arrangement (70, 70').

**11.** Torque transmission assembly according to one of Claims 1 to 10, **characterized by** a pump impeller (36) and a turbine wheel (T) arranged in the housing arrangement (12).

**12.** Torque transmission assembly according to Claim 11, **characterized in that** the turbine wheel (T) provides at least part of the absorption mass arrangement (Ti).

**13.** Torque transmission assembly according to Claim 11 or 12, **characterized in that** the turbine wheel (T) is coupled to the input region (24) or the output region (26) of the torsional vibration damper arrangement (16).

**14.** Torque transmission assembly according to Claim 9 or 10 and Claim 11 or 12, **characterized in that** the turbine wheel (T) is coupled to an intermediate mass arrangement (70, 70').

**15.** Torque transmission assembly according to Claim 14, **characterized in that** the turbine wheel (T) and at least one absorber arrangement (28) are coupled to the same intermediate mass arrangement (70, 70').

**16.** Torque transmission assembly according to one of Claims 11 to 15, **characterized in that** at least one absorber arrangement (28) is coupled to the turbine wheel (T).

**17.** Torque transmission assembly according to Claim 14, **characterized in that** no absorber arrangement (28) is coupled to the intermediate mass arrangement (70, 70') to which the turbine wheel (T) is coupled.

**18.** Torque transmission assembly according to one of Claims 1 to 17, **characterized in that**, for a moment of friction $(M_R)$ of the absorber arrangement (28), in particular of the absorber elasticity (30), the following applies:

$$M_R \ (n \ \leq \ n_G) \ \leq \ 7 \ Nm$$

$$M_R \ (n \ > \ n_G) \ \geq \ 4 \ Nm$$

n being the rotational speed of the torque transmission assembly (10) about the axis of rotation (A), and $n_G$ being a limiting rotational speed lying at a predetermined rotational-speed interval above a rotational speed corresponding to the characteristic frequency of the absorber arrangement (28).

19. Torque transmission assembly according to one of Claims 1 to 18 in conjunction with Claim 11, **characterized in that**, for a ratio of an axial width ($b_{KRL}$) of a fluid circuit formed by the turbine wheel (T) and the pump impeller (36) to the radial height ($h_{KRL}$) of the fluid circuit, the following applies:

$$0.2 \ \leq \ b_{KRL}/h_{KRL} \leq \ 1.2.$$

20. Torque transmission assembly according to one of Claims 1 to 19, **characterized in that**, for a ratio of a diameter ($\varnothing_{TF}$) of springs (54) of the absorber elasticity (30) to their radial distance ($RFN_{TF}$) with respect to the axis of rotation (A), the following applies:

$$0.1 \ \varnothing_{TF}/RFN_{TF} \ \leq \ 0.33.$$

21. Torque transmission assembly according to one Claims 1 to 20, **characterized in that**, for a ratio of a radial distance ($RFN_{TF}$) of springs (54) of the absorber arrangement (28) with respect to the axis of rotation (A) to the radial distance ($r_{TM}$) of a surface centre of gravity of a mass part (74) of the absorption mass arrangement (Ti) with respect to the axis of rotation (A), the following applies:

$$0.59 \ \leq \ RFN_{TF}/r_{TM} \ \leq \ 1.69.$$

22. Drive system, comprising a multi-cylinder internal combustion engine and a torque transmission assembly (10) according to one of the preceding claims, coupled to a crankshaft of the multi-cylinder internal combustion engine.

23. Drive system according to Claim 22, **characterized in that**, for the ratio of a mass moment of inertia ($MTM_T$) of the absorber arrangement (28), in particular of the absorption mass arrangement (Ti), to the number ($n_{ZYL}$) of cylinders of the multi-cylinder internal combustion engine, the following applies:

$$0.0033 \ kgm^2 \ \leq \ MTM_T/n_{ZYL} \ \leq \ 0.1 \ kgm^2.$$

24. Drive system according to Claim 22 or 23, **characterized in that**, for a ratio of a rigidity ($C_{TF}$) of the absorber elasticity (30) to the number ($n_{ZYL}$) of cylinders of the multi-cylinder internal combustion engine, the following applies:

$$0.92 \ Nm/° \leq \ C_{TF}/n_{ZYL} \ \leq \ 12 \ Nm/°.$$

25. Drive system according to one of Claims 22 to 24, **characterized in that**, for a ratio of the rotational speed, corresponding to a characteristic frequency of the absorber arrangement (28), of the multi-cylinder internal combustion engine to the number ($n_{ZYL}$) of cylinders of the multi-cylinder internal combustion engine, the following applies:

$$100/\text{min} \leq n_{EF}/n_{ZYL} \leq 1200/\text{min}.$$

**Revendications**

1. Ensemble de transmission de couple, en particulier convertisseur de couple hydrodynamique, embrayage hydraulique ou embrayage humide, comportant un agencement de carter (12), dans l'agencement de carter (12) de préférence un agencement d'amortisseur de vibrations de torsion (16) comprenant une région d'entrée (24) accouplée ou pouvant être accouplée à l'agencement de carter (12) et une région de sortie (26) à accoupler à un organe de sortie (GEW), comportant en outre au moins un agencement d'absorbeur de vibrations (28) comprenant un agencement de masse d'amortissement (Ti) accouplé à l'ensemble de transmission de couple (10) au moyen d'une élasticité d'absorbeur de vibrations (30),
   **caractérisé en ce que**, pour le rapport d'un moment d'inertie de masse ($MTM_T$) de l'agencement d'absorbeur de vibrations (28), en particulier de l'agencement de masse d'amortissement (Ti), à un moment d'inertie de masse ($MTM_W$) de l'ensemble de transmission de couple (10) sans agencement d'absorbeur de vibrations, l'on a :

$$0,1 \leq MTM_T/MTM_W \leq 0,5.$$

2. Ensemble de transmission de couple selon la revendication 1,
   **caractérisé en ce que** l'élasticité d'absorbeur de vibrations (30) comporte un agencement de matériau élastomère.

3. Ensemble de transmission de couple selon la revendication 1 ou 2,
   **caractérisé en ce que** l'élasticité d'absorbeur de vibrations (30) comporte un agencement de ressort, de préférence un agencement de ressort hélicoïdal.

4. Ensemble de transmission de couple selon l'une quelconque des revendications 1 à 3,
   **caractérisé en ce qu'**au moins un agencement d'absorbeur de vibrations (28) est accouplé à l'agencement de carter (12).

5. Ensemble de transmission de couple selon l'une quelconque des revendications 1 à 4,
   **caractérisé en ce qu'**au moins un agencement d'absorbeur de vibrations (28) est accouplé à l'agencement d'amortisseur de vibrations de torsion (16).

6. Ensemble de transmission de couple selon la revendication 5,
   **caractérisé en ce qu'**au moins un agencement d'absorbeur de vibrations (28) est accouplé à la région d'entrée (34) de l'agencement d'amortisseur de vibrations de torsion (16).

7. Ensemble de transmission de couple selon la revendication 5 ou 6,
   **caractérisé en ce qu'**au moins un agencement d'absorbeur de vibrations (28) est accouplé à la région de sortie de l'agencement d'amortisseur de vibrations de torsion (16).

8. Ensemble de transmission de couple selon l'une quelconque des revendications 1 à 7,
   **caractérisé en ce que** l'agencement d'amortisseur de vibrations de torsion (16) comporte une unité d'amortisseur de vibrations de torsion (TD) comprenant un côté primaire (18) et une unité secondaire (20) rotative par rapport au côté primaire (18) autour d'un axe de rotation (A) à l'encontre de l'action d'un agencement de ressort d'amortissement (22), la région d'entrée (24) de l'agencement d'amortisseur de vibrations de torsion (16) comportant le côté primaire (18) et la région de sortie (26) de l'agencement d'amortisseur de vibrations de torsion (16) comportant le côté secondaire (20).

9. Ensemble de transmission de couple selon l'une quelconque des revendications 1 à 7,
   **caractérisé en ce que** l'agencement d'amortisseur de vibrations de torsion (16) comporte une pluralité d'unités d'amortisseur de vibrations de torsion (TD1, TD2, TD3) agissant en série, chaque unité d'amortisseur de vibrations de torsion (TD1, TD2, TD3) comportant un côté primaire (18, 18', 18") et une unité secondaire (20, 20', 20") rotative par rapport au côté primaire (18, 18', 18") autour d'un axe de rotation (A) à l'encontre de l'action d'un agencement de ressort d'amortissement (22, 22', 22"), la région d'entrée (24) de l'agencement d'amortisseur de vibrations de torsion (16) comportant le côté primaire (18) d'une première des unités d'amortisseur de vibrations de torsion (TD1), le côté de sortie (26) de l'agencement d'amortisseur de vibrations de torsion (16) comportant le côté secondaire (20'; 20") d'une dernière des unités d'amortisseur de vibrations de torsion (TD2 ; TD3) et le côté secondaire (20, 20') d'une unité d'amortisseur de vibrations de torsion précédente de deux unités d'amortisseur de vibrations de torsion (TD1, TD2, TD3) disposées l'une à la suite de l'autre et le côté primaire (18', 18") d'une unité d'amortisseur de vibrations de torsion suivante de celles-ci produisant au moins une partie d'un agencement de masse intermédiaire (70, 70').

10. Ensemble de transmission de couple selon la revendication 9 et selon l'une quelconque des revendications 5 à 7, **caractérisé en ce qu'**au moins un agencement d'absorbeur de vibrations (28) est accouplé à un agencement de masse intermédiaire (70, 70').

11. Ensemble de transmission de couple selon l'une quelconque des revendications 1 à 10, **caractérisé par** une roue de pompe (36) et une roue de turbine (T) disposée dans l'agencement de carter (12).

12. Ensemble de transmission de couple selon la revendication 11, **caractérisé en ce que** la roue de turbine (T) produit au moins une partie de l'ensemble de masse d'amortissement (Ti).

13. Ensemble de transmission de couple selon la revendication 11 ou 12, **caractérisé en ce que** la roue de turbine (T) est accouplée à la région d'entrée (24) ou à la région de sortie (26) de l'agencement d'amortisseur de vibrations de torsion (16).

14. Ensemble de transmission de couple selon la revendication 9 ou 10 et la revendication 11 ou 12, **caractérisé en ce que** la roue de turbine (T) est accouplée à un agencement de masse intermédiaire (70, 70').

15. Ensemble de transmission de couple selon la revendication 14, **caractérisé en ce que** la roue de turbine (T) et au moins un agencement d'absorbeur de vibrations (28) sont accouplés au même agencement de masse intermédiaire (70, 70').

16. Ensemble de transmission de couple selon l'une quelconque des revendications 11 à 15, **caractérisé en ce qu'**au moins un agencement d'absorbeur de vibrations (28) est accouplé à la roue de turbine (T).

17. Ensemble de transmission de couple selon la revendication 14, **caractérisé en ce qu'**aucun agencement d'absorbeur de vibrations (28) n'est accouplé à l'agencement de masse intermédiaire (70, 70') auquel la roue de turbine (T) est accouplée.

18. Ensemble de transmission de couple selon l'une quelconque des revendications 1 à 17, **caractérisé en ce que**, pour un moment de friction ($M_R$) de l'agencement d'absorbeur de vibrations (28), en particulier de l'élasticité d'absorbeur de vibrations (30), l'on a :

$$M_R \ (n \leq n_G) \ \leq \ 7 \ Nm,$$

$$M_R \ (n > n_G) \ \geq \ 4 \ Nm,$$

n étant la vitesse de rotation de l'ensemble de transmission de couple (10) autour de l'axe de rotation (A) et $n_G$ étant une vitesse de rotation limite supérieure d'un écart de vitesse de rotation prédéfini à une vitesse de rotation correspondant à la fréquence propre de l'agencement d'absorbeur de vibrations (28).

19. Ensemble de transmission de couple selon l'une quelconque des revendications 1 à 18 en association avec la revendication 11, **caractérisé en ce que**, pour un rapport d'une largeur axiale ($b_{KRL}$) d'un circuit de fluide formé par la roue de turbine (T) et la roue de pompe (36) à la hauteur radiale ($h_{KRL}$) du circuit de fluide, l'on a :

$$0,2 \leq b_{KRL}/h_{KRL} \leq 1,2.$$

**20.** Ensemble de transmission de couple selon l'une quelconque des revendications 1 à 19, **caractérisé en ce que**, pour un rapport d'un diamètre ($\varnothing_{TF}$) de ressorts (54) de l'élasticité d'absorbeur de vibrations (30) à leur distance radiale ($RFN_{TF}$) par rapport à l'axe de rotation (A), l'on a :

$$0,1 \ \varnothing_{TF}/RFN_{TF} \leq 0,33.$$

**21.** Ensemble de transmission de couple selon l'une quelconque des revendications 1 à 20, **caractérisé en ce que**, pour un rapport d'une distance radiale ($RFN_{TF}$) de ressorts (54) de l'agencement d'absorbeur de vibrations (28) par rapport à l'axe de rotation (A) à la distance radiale ($r_{TM}$) d'un barycentre de surface d'une partie de masse (74) de l'agencement de masse d'amortissement (Ti) par rapport à l'axe de rotation (A), l'on a :

$$0,59 \leq RFN_{TF}/r_{TM} \leq 1,69.$$

**22.** Système d'entraînement, comportant un moteur à combustion interne à plusieurs cylindres et un ensemble de transmission de couple (10) selon l'une quelconque des revendications précédentes, accouplé à un vilebrequin du moteur à combustion interne à plusieurs cylindres.

**23.** Système d'entraînement selon la revendication 22, **caractérisé en ce que**, pour le rapport d'un moment d'inertie de masse ($MTM_T$) de l'agencement d'absorbeur de vibrations (28), en particulier de l'agencement de masse d'amortissement (Ti), au nombre ($n_{ZYL}$) des cylindres du moteur à combustion interne à plusieurs cylindres, l'on a :

$$0,0033 \ kgm^2 \leq MTM_T/n_{ZYL} \leq 0,1 \ kgm^2.$$

**24.** Système d'entraînement selon la revendication 22 ou 23, **caractérisé en ce que**, pour un rapport d'une rigidité ($C_{TF}$) de l'élasticité d'absorbeur de vibrations (30) au nombre ($n_{ZYL}$) des cylindres du moteur à combustion interne à plusieurs cylindres, l'on a :

$$0,92 \ Nm/° \leq C_{TF}/n_{ZYL} \leq 12 \ Nm/°.$$

**25.** Système d'entraînement selon l'une quelconque des revendications 22 à 24, **caractérisé en ce que**, pour un rapport d'une vitesse de rotation du moteur à combustion interne à plusieurs cylindres correspondant à une fréquence propre de l'agencement d'absorbeur de vibrations (28) au nombre ($n_{ZYL}$) des cylindres du moteur à combustion interne à plusieurs cylindres, l'on a :

$$100/min \leq n_{EF}/n_{ZYL} \leq 1200/min.$$

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

**Fig. 37**

70'

10

TD1  TD2  TD3  GEW

30

28

T$_i$

**Fig. 38**

16  26

10

TD1  TD2  TD3  GEW

30

28

T$_i$

**Fig. 39**

12

10

28

30

TI

Fig. 40

Fig. 41

Fig. 42

Fig. 43

Fig. 44

Fig. 45

Fig. 46

Fig. 47

Fig. 48

Fig. 49

Fig. 50

Fig. 51

Fig. 52

Fig. 53

Fig. 54

Fig. 55

EP 2 567 120 B1

Fig. 56

Fig. 57

Fig. 58

43

Fig. 59

Fig. 60

Tabelle 1

| 1 | $\varnothing_{TF} / b_{TM}$ | $0{,}13 \leq \varnothing_{TF} / b_{TM} \leq 0{,}91$ |
|---|---|---|
| 2 | $\varnothing_{TF} / RFN_{TF}$ | $0{,}1 \leq \varnothing_{TF} / RFN_{TF} \leq 0{,}33$ |
| 3 | $\varnothing_{TF} / b_{KRL}$ | $0{,}26 \leq \varnothing_{TF} / b_{KRL} \leq 0{,}57$ |
| 4 | $\varnothing_{TF} / h_{KRL}$ | $0{,}25 \leq \varnothing_{TF} / h_{KRL} \leq 0{,}42$ |
| 5 | $\varnothing_{TF} / \varnothing_{HYD}$ | $0{,}063 \leq \varnothing_{TF} / \varnothing_{HYD} \leq 0{,}090$ |
| 6 | $\varnothing_{TF} / \varnothing_{TD}$ | $0{,}61 \leq \varnothing_{TF} / \varnothing_{TD} \leq 1{,}12$ |
| 7 | $RFN_{TF} / r_{TM}$ | $0{,}59 \leq RFN_{TF} / r_{TM} \leq 1{,}69$ |
| 8 | $RFN_{TF} / RFN_{TD}$ | $0{,}59 \leq RFN_{TF} / RFN_{TD} \leq 1{,}69$ |
| 9 | $RFN_{TF} / r_{WK}$ | $0{,}74 \leq RFN_{TF} / r_{WK} \leq 1{,}24$ |
| 10 | $RFN_{TF} / b_{KRL}$ | $1{,}16 \leq RFN_{TF} / b_{KRL} \leq 3{,}05$ |
| 11 | $RFN_{TF} / h_{KRL}$ | $1{,}14 \leq RFN_{TF} / h_{KRL} \leq 2{,}26$ |
| 12 | $RFN_{TF} / \varnothing_{HYD}$ | $0{,}28 \leq RFN_{TF} / \varnothing_{HYD} \leq 0{,}48$ |
| 13 | $RFN_{TF} / n_{ZYL}$ | $11{,}17 \leq RFN_{TF} / n_{ZYL} \leq 113 \quad [mm]$ |
| 14 | $r_{TM} / b_{KRL}$ | $1{,}16 \leq r_{TM} / b_{KRL} \leq 3{,}05$ |
| 15 | $r_{TM} / h_{KRL}$ | $1{,}14 \leq r_{TM} / h_{KRL} \leq 2{,}26$ |
| 16 | $r_{TM} / \varnothing_{HYD}$ | $0{,}28 \leq r_{TM} / \varnothing_{HYD} \leq 0{,}48$ |
| 17 | $r_{TM} / RFN_{TD}$ | $0{,}59 \leq r_{TM} / RFN_{TD} \leq 1{,}69$ |
| 18 | $r_{TM} / r_{WK}$ | $0{,}74 \leq r_{TM} / r_{WK} \leq 1{,}24$ |
| 19 | $b_{KRL} / \varnothing_{TD}$ | $1{,}51 \leq b_{KRL} / \varnothing_{TD} \leq 3{,}05$ |
| 20 | $MTM_T / MTM_W$ | $0{,}1 \leq MTM_T / MTM_W \leq 0{,}5$ |
| 21 | $MTM_T / n_{ZYL}$ | $0{,}0033 \leq MTM_T / n_{ZYL} \leq 0{,}1 \quad [kgm^2]$ |
| 22 | $C_{TF} / n_{ZYL}$ | $0{,}92 \leq C_{TF} / n_{ZYL} \leq 12 \quad [Nm/°]$ |
| 23 | $n_{EF} / n_{ZYL}$ | $100 \leq n_{EF} / n_{ZYL} \leq 1200 \; [1/min]$ |
| 24 | $M_R$ | $M_R \, (n \leq n_G) \leq 7 \; Nm$<br>$M_R \, (n > n_G) \geq 4 \; Nm$ |
| 25 | $b_{KRL} / h_{KRL}$ | $0{,}2 \leq b_{KRL} / h_{KRL} \leq 1{,}2$ |

# Fig. 61

## Tabelle 2

| | |
|---|---|
| $\varnothing_{TF}$ | = Durchmesser der Federn 64 der Tilgeranordnung 28 |
| $\varnothing_{TD}$ | = Durchmesser der Dämpferfedern einer Torsionschwingungsdämpfereinheit TD |
| $\varnothing_{HYD}$ | = Durchmesser des Fluidkreislaufs |
| $\varnothing_{LTR}$ | = Durchmesser am Leitradgrund |
| $RFN_{TF}$ | = Radius der Federn 64 der Tilgeranordnung 28 zur Drehachse A |
| $RFN_{TD}$ | = Radius der Dämpferfedern zur Drehachse A |
| $b_{KRL}$ | = axiale Breite des Fluidkreislaufs |
| $b_{TM}$ | = axiale Breite eines Masseteils 74 der Tilgermassenanordnung 28 |
| $r_{TM}$ | = Radius zum Flächenschwerpunkt eines Masseteils 74 |
| $r_{WK}$ | = mittlerer Reibradius der Überbrückungskupplung 14 |
| $h_{KRL}$ | = radiale Höhe des Fluidkreislaufs oder minimale bzw. maximale Höhe der Turbinenradschaufeln oder Pumpenradschaufeln |
| $MTM_T$ | = Massenträgheitsmoment der Tilgermassenanordnung Ti |
| $MTM_W$ | = Massenträgheitsmoment der Drehmomentübertragungsaugruppe 10 ohne Tilgeranordnung |
| $n$ | = Motordrehzahl |
| $n_{ZYL}$ | = Anzahl der Zylinder des Motors |
| $n_{EF}$ | = Eigenfrequenz der Tilgeranordnung 28 (Drehzahl) bei Hauptordnung des Motors |
| $n_G$ | = Grenzdrehzahl (= $n_{EF}$ + 600 min$^{-1}$) |
| $C_{TF}$ | = Federsteifigkeit der Tilgerelastizität 30 |
| $M_R$ | = Gesamtreibmoment der Tilgeranordnong, insb. Tilgerelastizität |

## Fig. 62

Fig. 63

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10236752 A1